(19) Europäisches Patentamt / European Patent Office / Office européen des brevets

(11) **EP 4 063 417 B1**

(12) **EUROPEAN PATENT SPECIFICATION**

(45) Date of publication and mention of the grant of the patent:
**11.03.2026 Bulletin 2026/11**

(21) Application number: **20889212.5**

(22) Date of filing: **18.11.2020**

(51) International Patent Classification (IPC):
***C08F 297/04*** *(2006.01)* ***C08F 293/00*** *(2006.01)*
***C08K 5/54*** *(2006.01)* ***C08K 5/5415*** *(2006.01)*
***C08L 21/00*** *(2006.01)* ***C08L 53/02*** *(2006.01)*
***C08K 3/06*** *(2006.01)* ***C08K 3/36*** *(2006.01)*
***C08L 9/00*** *(2006.01)* ***C08F 8/04*** *(2006.01)*
***C08L 7/00*** *(2006.01)*

(52) Cooperative Patent Classification (CPC):
(C-Sets available)
**C08L 21/00; C08F 8/04; C08F 297/044; C08L 7/00; C08L 9/00; C08L 9/06** (Cont.)

(86) International application number:
**PCT/JP2020/042905**

(87) International publication number:
**WO 2021/100738 (27.05.2021 Gazette 2021/21)**

(54) **RESIN COMPOSITION AND MOLDED ARTICLE**
HARZZUSAMMENSETZUNG UND FORMARTIKEL
COMPOSITION DE RÉSINE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2019 JP 2019207920**
**17.07.2020 JP 2020123089**

(43) Date of publication of application:
**28.09.2022 Bulletin 2022/39**


(73) Proprietor: **Kuraray Co., Ltd.**
**Kurashiki-shi, Okayama 710-0801 (JP)**

(72) Inventors:
- **KONISHI, Daisuke**
**Kamisu-shi, Ibaraki 314-0197 (JP)**
- **SASAKI, Hiromitsu**
**Kamisu-shi, Ibaraki 314-0197 (JP)**
- **HASEGAWA, Takumi**
**Kamisu-shi, Ibaraki 314-0197 (JP)**

(74) Representative: **Müller-Boré & Partner Patentanwälte PartG mbB**
**Friedenheimer Brücke 21**
**80639 München (DE)**



(56) References cited:
**EP-A1- 2 835 386** **EP-A1- 2 835 387**
**EP-A1- 2 980 153** **EP-A1- 2 980 154**
**EP-A1- 3 081 593** **EP-A1- 3 081 613**
**EP-A1- 3 342 793** **JP-A- 2014 208 796**
**JP-A- 2016 113 614** **JP-A- 2016 113 614**
**JP-A- 2018 024 776** **JP-A- 2019 026 826**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/04, C08F 297/044;**
**C08L 9/06, C08L 53/02, C08K 3/36, C08K 5/548;**
**C08L 9/06, C08L 53/025, C08K 3/36, C08K 5/548**

## Description

### Technical Field

The present invention relates to a resin composition containing at least a rubber, a block copolymer having a farnesene-derived structural unit, and a crosslinking agent, and to a molded article of the resin composition.

### Background Art

A rubber composition prepared by mixing a thermoplastic elastomer such as a styrenic elastomer or an olefinic elastomer and various rubber has excellent mechanical properties and flexibility, and is therefore used in a wide field of soles for footwear, various tires, building materials such as packing, and machine parts. However, a rubber composition containing a thermoplastic elastomer becomes slippery when water adsorbs thereto, and especially for use for soles for footwear and various tires, the composition is highly risky and is problematic.
Given the situation, investigations have been made for improving the wet grip performance of a rubber composition containing a thermoplastic elastomer and a rubber component.
For example, a resin composition has been proposed in which the number-average molecular weight of the thermoplastic elastomer and the glass transition temperature of the rubber component are specifically defined, or which contains a tackifying resin or a hydrogenated block copolymer (for example, PTLs 1 to 8). Also a resin composition has been proposed which contains a hydrogenated block copolymer containing a polymer block containing a farnesene-derived structural unit (for example, PTL 9).

### Citation List

### Patent Literature

PTL 1: US2013/0086822(A1)
PTL 2: WO2006/121069(A1)
PTL 3: JP2017-39819(A)
PTL 4: JP2016-210937(A)
PTL 5: JP2014-189697(A)
PTL 6: JP2014-520017(A)
PTL 7: JP2004-75882(A)
PTL 8: JP2003-292672(A)
PTL 9: JP2019-26826(A)

### Summary of Invention

### Technical Problem

However, the techniques disclosed in PTLs 1 to 8 could not produce a resin composition excellent in the balance of flexibility, tear strength, tensile characteristics, dry grip performance and wet grip performance, and further improvements are desired. Further, PTLs 1 to 8 describe nothing relating to a block copolymer that contains a polymer block containing an aromatic vinyl compound-derived structural unit and a polymer block containing a farnesene-derived structural unit, and a hydrogenate thereof.
The resin composition disclosed in PTL 9 is excellent in the balance of flexibility, tear strength, tensile characteristics, dry grip performance and wet grip performance, but is desired to be further improved in point of the performance of non-slippiness of molded articles such as grip performance thereof in various environments. In addition, for use for soles for footwear or various tires, excellent wear resistance is desired.
Under the circumstances, an object of the present invention is to provide a resin composition capable of forming a molded article not slippery and excellent in wear resistance, and a molded article of the resin composition.

### Solution to Problem

As a result of assiduous studies made for solving the above-mentioned problems, the present inventors have reached the following present invention and have solved the problems.

Specifically, the present invention is as described below.

[1] A resin composition containing a rubber (I), a block copolymer (II) and a crosslinking agent (III), wherein:

the ratio by mass of the rubber (I) to the block copolymer (II), (I)/(II) is 99/1 to 55/45, and
the block copolymer (II) is a block copolymer containing a polymer block (A) that contains an aromatic vinyl compound-derived structural unit and a polymer block (B) that contains a farnesene-derived structural unit (b1).

[2] A molded article of the resin composition of the above [1].
[3] A sole using the resin composition of the above [1] as at least a part thereof.

Advantage Effects of Invention

According to the present invention, there can be provided a resin composition capable of forming a molded article that is not slippery and is excellent in wear resistance, and a molded article of the resin composition.

Description of Embodiments

Hereinunder the present invention is described with reference to examples of an embodiment thereof (hereinunder this may be referred to as "the present embodiment"). However, the embodiment shown below is an exemplification for embodying the technical idea of the present invention, and the present invention is not limited to the following description.
Also in the present specification, preferred embodiments are shown, but combinations of two or more individual embodiments are also preferred embodiments. Regarding the matter shown by a numerical range, in the case where there are some numerical ranges, the lower limit and the upper limit thereof may be selectively combined to be preferred embodiments.
In the present specification, an expression of a description of a numerical range of "XX to YY" means "XX or more and YY or less".

<Resin Composition>

The resin composition of the present embodiment contains:
a rubber (I), a block copolymer (II) and a crosslinking agent (III), wherein:

the ratio by mass of the rubber (I) to the block copolymer (II), (I)/(II) is 99/1 to 55/45, and
the block copolymer (II) is a block copolymer containing a polymer block (A) that contains an aromatic vinyl compound-derived structural unit and a polymer block (B) that contains a farnesene-derived structural unit (b1).

Using the block copolymer (II) that contains a farnesene-derived structural unit (b1), the resin composition is given flexibility as described below, and has road surface followability and therefore has high expulsion performance (water repelling performance). Further, the block copolymer (II) is excellent in water repelling performance and is therefore expected to be excellent especially in non-slippiness of molded articles (hereinafter "non-slippiness" may be referred to as "grip performance") under any of dry condition (dry surface), wet condition (wet surface) or ice condition (snow-covered surface or ice-covered surface).
In addition, by controlling the mass ratio, (I)/(II) to fall within the above-mentioned specific numerical range, the resin composition can be made to be excellent in both non-slippiness and wear resistance.
Further, the resin composition of the present embodiment is excellent in the balance of tear strength and tensile characteristics, in addition to the above-mentioned performance, and since the content of the rubber (I) is larger than that of the block copolymer (II) therein, the resin composition is expected to lead cost reduction.

[Rubber (I)]

The rubber (I) contained in the resin composition of the present embodiment includes natural rubbers and various synthetic rubbers that are used as rubber materials for rubber soles such as soles for footwear.
The rubber (I) does not include the block copolymer (II).
Natural rubbers (NR) include natural rubbers generally used in the field of various uses for tire industries or soles for footwear, such as TSR (technically specified rubber), e.g., SMR (TSR from Malaysia), SIR (TSR from Indonesia) or STR (TSR from Thailand), and RSS (ribbed smoked sheet), as well as high-purity natural rubbers, and modified natural

rubbers such as epoxidized natural rubbers, hydroxylated natural rubbers, hydrogenated natural rubbers, and grafted natural rubbers.

Synthetic rubbers include a styrene-butadiene copolymer rubber (SBR), a polyisoprene rubber (IR), a polybutadiene rubber (BR), an acrylonitrile-butadiene copolymer rubber (NBR), an ethylene-propylene-diene copolymer (EP, EPM), an ethylene-propylene-non-conjugated-diene copolymer rubber (EPDM), a butyl rubber (isobutylene-isoprene rubber (IIR)), and a halogenated butyl rubber prepared by modifying a butyl rubber.

Among the above rubbers, from the viewpoint of various physical properties such as strength, wear resistance, elasticity and flexibility required in various uses, as well as compatibility with various components such as the block copolymer (II), preferred is at least one selected from the styrene-butadiene copolymer rubber, the natural rubber, the polyisoprene rubber, the polybutadiene rubber, the acrylonitrile-butadiene copolymer rubber, the ethylene-propylene-diene copolymer, the butyl rubber, and the halogenated butyl rubber prepared by modifying a butyl rubber.

One alone or two or more kinds can be used for the rubber (I).

Examples of specific combinations in the case of combination use for the rubber (I) include two or more kinds selected from NR, SBR and BR. Using two or more kinds of these rubbers as the rubber (I) is preferred from the viewpoint of the balance of grip performance, wear resistance and mechanical properties.

In the case where at least NR is used for the rubber (I), preferably, a softener to be mentioned below is used together. Among softeners, a liquid polydiene and a hydrogenated product or a modified product thereof (this may be simply referred to as "liquid polydiene") are preferred. When a liquid polydiene is used together, it is considered that the viscosity of NR lowers and the dispersibility thereof in the composition increases, and therefore a molded article having excellent grip performance can be more readily obtained. One alone or two or more kinds of liquid polydienes can be used either alone or as combined.

The weight-average molecular weight (Mw) of the liquid polydiene is preferably 100 to 200,000, more preferably 1,000 to 130,000, even more preferably 2,000 to 60,000, further more preferably 5,000 to 50,000. When the weight-average molecular weight falls within the above range, processability improves and the resin composition can be prevented from bleeding out.

The number-average molecular weight (Mn) of the liquid polydiene is preferably 2,000 to 180,000, more preferably 3,000 to 130,000, even more preferably 4,000 to 50,000, further more preferably 5,000 to 35,000. When the number-average molecular weight falls within the above range, processability improves and the resin composition can be prevented from bleeding out.

The molecular weight distribution (Mw/Mn) of the liquid polydiene is preferably 1 to 6, more preferably 1 to 4, even more preferably 1 to 3, further more preferably 1 to 2. When the molecular weight distribution falls within the above range, the viscosity of the liquid polydiene fluctuates little and the handleability thereof is easy.

Mw and Mn of the liquid polydiene are values determined in gel permeation chromatography (GPC), and mean the values measured according to the method described in the section of Examples given hereunder.

In preferred embodiments, for example, a liquid polydiene can be further contained in a combination of NR, SBR and BR. In particular, in the combination where the content of NR is 50% by mass or more, the advantageous effect in combined use with the liquid polydiene is more effectively exhibited.

In one example of the embodiment of using at least NR as the rubber (I), the content of the liquid polydiene to be used as a softener is preferably 0.1 to 10 parts by mass relative to the total amount, 100 parts by mass of the rubber (I), the block copolymer (II) and the liquid polybutadiene, more preferably 0.5 to 9 parts by mass, even more preferably 1 to 8 parts by mass, further more preferably 1.5 to 7 parts by mass.

The rubber (I) does not include the liquid polydiene.

As SBR, for example, any of an emulsion-polymerized styrene-butadiene rubber (E-SBR), a solution-polymerized styrene-butadiene rubber (S-SBR) and a modified styrene-butadiene rubber (modified SBR) can be used.

A commercially available SBR can also be used. One having a styrene content of 0.1 to 70% by mass is preferred, 5 to 50% by mass is more preferred, 15 to 35% by mass is still more preferred, and 15 to 25% by mass is further more preferred.

SBR is preferred as having a good balance of physical properties of elasticity and strength, as good in kneading and molding workability, and as easily available.

As IR, commercially available IR can be used, and preferred are IR having a high cis-form content and produced by polymerization using a Ziegler catalyst, and IR having an ultra-high cis-form content and produced by polymerization using a lanthanoid-type rare earth metal catalyst.

The weight-average molecular weight (Mw) of IR is preferably 90,000 to 2,000,000, more preferably 150,000 to 1,500,000. When Mw falls within the range, moldability, tear strength and tensile characteristics can be good. The weight-average molecular weight of IR is a polystyrene-standard weight-average molecular weight determined by gel permeation chromatography (GPC).

The vinyl content in IR is preferably 50% by mass or less, more preferably 40% by mass or less, even more preferably 30% by mass or less.

IR is preferred as having a good balance of physical properties of mechanical strength, and as easily available.
As BR, commercially available BR can be used, and preferred are BR having a high cis-form content and produced by polymerization using a Ziegler catalyst, and BR having an ultra-high cis-form content and produced by polymerization using a lanthanoid-type rare earth metal catalyst.
The weight-average molecular weight (Mw) of BR is preferably 90,000 to 2,000,000, more preferably 150,000 to 1,500,000, even more preferably 250,000 to 1,000,000, further more preferably 350,000 to 700,000. When Mw falls within the range, moldability, tear strength and tensile characteristics can be good.
The vinyl content in BR is preferably 50% by mass or less, more preferably 40% by mass or less, even more preferably 30% by mass or less.
BR is preferred as expected to be able to impart excellent wear resistance to molded articles of the resin composition.
As NBR, commercially available NBR can be used, and preferred are NBR having an acrylonitrile content of 20 to 41% by mass, more preferably 25 to 41% by mass. When the acrylonitrile content falls within the range, molded articles of the resin composition is expected to be given more excellent grip performance and wear resistance in various environments.
As the ethylene-propylene-diene copolymer (EP, EPM) and the ethylene-propylene-non-conjugated-diene copolymer rubber (EPDM), commercially available EP and EPDM can be used. The non-conjugated diene to constitute EPDM includes 5-ethylidene-2-norbornene (ENB), 1,4-hexadiene, 5-methylene-2-norbornene (MNB), 1,6-octadiene, 5-methyl-1,4-hexadiene, 3,7-dimethyl-1,6-octadiene, 1,3-cyclopentadiene, 1,4-cyclohexadiene, tetrahydroindene, methyltetrahydroindene, dicyclopentadiene, 5-isopropylidene-2-norbornene, 5-vinyl-norbornene, dicyclooctadiene, and methylene-norbornene. Among these, 5-ethylidene-2-norbornene (ENB) is preferred, from the viewpoint of vulcanization speed. Among the ethylene-propylene-diene copolymer (EP, EPM) and the ethylene-propylene-non-conjugated-diene copolymer rubber (EPDM), preferred is the ethylene-propylene-non-conjugated-diene copolymer rubber (EPDM) from the viewpoint of the ability to attain a higher vulcanization speed.
IIR may also be a non-halogenated butyl rubber and a regenerated butyl rubber, and those usable in the field of tire industries or soles for footwear can be used here. The halogenated butyl rubber is one modified by introducing a halogen into the molecule of IIR, and includes a brominated butyl rubber (Br-IIR) and a chlorinated butyl rubber (Cl-IIR). In addition, also usable is brominated isobutylene-p-methylstyrene copolymer.

[Block Copolymer (II)]

Containing the block copolymer (II), the resin composition of the present embodiment can be more flexible and hardly slippery and can exhibit wear resistance, and is further expected to exhibit tensile characteristics and tear strength.
The block copolymer (II) can be an unhydrogenated block copolymer (hereinafter this may be referred to as "block copolymer (P)"), or can also be a hydrogenated block copolymer (hereinafter this may be referred to as "hydrogenated block copolymer (Q)") prepared by hydrogenating the block copolymer (P) at a specific hydrogenation ratio as described below.

(Polymer Block (A))

The polymer block (A) contains a structural unit derived from an aromatic vinyl compound. Examples of the aromatic vinyl compound include styrene, $\alpha$-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene and divinylbenzene. One alone or two or more kinds of these aromatic vinyl compounds can be used either singly or as combined. Among these, preferred are styrene, $\alpha$-methylstyrene and 4-methylstyrene, and more preferred is styrene.
The polymer block (A) may contain a structural unit derived from any other monomer than an aromatic vinyl compound, for example, a structural unit derived from any other monomer such as a monomer constituting the polymer block (B) to be mentioned hereinunder. However, the content of the structural unit derived from an aromatic vinyl compound in the polymer block (A) is preferably 60% by mass or more, more preferably 70% by mass or more, even more preferably 80% by mass or more, further more preferably 90% by mass or more, and is especially preferably 100% by mass.
The content of the polymer block (A) in the block copolymer (II) is preferably 10 to 45% by mass, more preferably 10 to 40% by mass, even more preferably 10 to 30% by mass, further more preferably 15 to 25% by mass. When the content is 10% by mass or more, the resin composition can have good moldability and can readily exhibit more excellent wear resistance and can provide good tear strength and tensile characteristics. When the content is 45% by mass or less, the resin composition can have sufficient flexibility, can exhibit non-slippiness, and can readily exhibit good moldability,

tear strength and tensile characteristics.

(Polymer Block (B))

The polymer block (B) contains a farnesene-derived structural unit (b1) (hereinafter this may be simply referred to as "structural unit (b1)").

The farnesene may be any of α-farnesene or β-farnesene represented by the following formula (1), but from the viewpoint of easiness in producing the block copolymer (II), β-farnesene is preferred. α-farnesene and β-farnesene can be used together as combined.

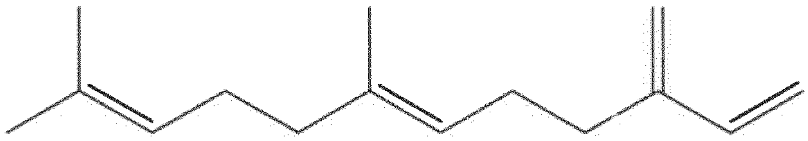

(1)

The content of the farnesene-derived structural unit (b1) in the polymer block (B) is preferably 1 to 100% by mass. Since the polymer block (B) contains the farnesene-derived structural unit (b1), flexibility is bettering, and grip performance is excellent. From this viewpoint, the content of the farnesene-derived structural unit (b1) in the polymer block (B) is more preferably 10 to 100% by mass, even more preferably 20 to 100% by mass, further more preferably 30 to 100% by mass, especially more preferably 50 to 100% by mass, and is most preferably 100% by mass, that is, the polymer block (B) is most preferably composed of the structural unit (b1).

In the case where the farnesene is a bio-based one, the amount to be used of the other conjugated diene than farnesene, such as petroleum-derived butadiene and isoprene, can be suppressed, and the petroleum dependency can be reduced. From this viewpoint, the content of the farnesene-derived structural unit (b1) in the polymer block (B) is preferably 50 to 100% by mass, more preferably 60 to 100% by mass, even more preferably 70 to 100% by mass, and further more preferably 80 to 100% by mass.

In the case where the polymer block (B) contains a structural unit (b2) to be mentioned below, the content of the farnesene-derived structural unit (b1) in the polymer block (B) is preferably 1% by mass or more, more preferably 10% by mass or more, even more preferably 20% by mass or more, further more preferably 30% by mass or more, and especially more preferably 50% by mass or more.

The polymer block (B) may contain any other conjugated diene-derived structural unit (b2) than farnesene (hereinafter this may be simply referred to as "structural unit (b2)"), and the content of the structural unit (b2) in the polymer block (B) is preferably 0 to 99% by mass.

Examples of the conjugated diene include isoprene, butadiene, 2,3-dimethyl-butadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene and chloroprene. One alone or two or more kinds of these may be used either singly or as combined. Among these, preferred are isoprene, butadiene and myrcene, and more preferred are isoprene and butadiene.

In the case where the polymer block (B) contains the structural unit (b2), the content of the structural unit (b2) is preferably 90% by mass or less, more preferably 80% by mass or less, even more preferably 70% by mass or less, further more preferably 50% by mass or less.

The polymer block (B) may contain any other structural unit than the structural unit (b1) and the structural unit (b2). The total content of the structural unit (b1) and the structural unit (b2) in the polymer block (B) is preferably 60% by mass or more, more preferably 80% by mass or more, and is even more preferably 100% by mass.

(Polymer Block (C))

The block copolymer (II) can contain a polymer block (C) containing a structural unit (c2) derived from a conjugated diene except farnesene, in addition to the polymer block (A) and the polymer block (B) mentioned above.

The polymer block (C) is preferably a polymer block in which the content of a farnesene-derived structural unit (c1) is 0% by mass or more and less than 1% by mass, and the content of the structural unit (c2) derived from a conjugated diene except farnesene is 1 to 100% by mass.

The farnesene to constitute the farnesene-derived structural unit (c1) (hereinafter this may be simply referred to as "structural unit (c1)"), and the conjugated diene to constitute the structural unit (c2) derived from a conjugated diene except farnesene (hereinafter this may be simply referred to as "structural unit (c2)") may be the same as those of the above-mentioned farnesene to constitute the farnesene-derived structural unit (b1) and the above-mentioned conjugated diene to constitute the structural unit (b2) derived from a conjugated diene except farnesene, respectively.

As the conjugated diene to constitute the structural unit (c2) derived from a conjugated diene except farnesene, above all, preferred are isoprene, butadiene and myrcene, and more preferred are isoprene and butadiene. One alone or two or more of these may be used either singly or as combined.

The content of the farnesene-derived structural unit (c1) in the polymer block (C) is preferably 0% by mass.

The content of the structural unit (c2) derived from a conjugated diene except farnesene in the polymer block (C) is preferably 60 to 100% by mass, more preferably 80 to 100% by mass, even more preferably 90 to 100% by mass, and is especially preferably 100% by mass. When the polymer block (C) that contains the structural unit (c2) is used, the block copolymer (P) can have different conjugated dienes of the structural unit (b1) and the structural unit (c2), and even when the hydrogenated block copolymer (Q) of the block copolymer (P) is crosslinked with a crosslinking agent (III) to be mentioned hereinunder, excellent wear resistance and tensile characteristics can be still maintained and tear strength can be exhibited, that is, both tensile characteristics and tear strength can be satisfied in a well-balanced manner.

The polymer block (C) may contain any other structural unit than the farnesene-derived structural unit (c1) and the structural unit (c2) derived from a conjugated diene except farnesene.

The total content of the structural unit (c1) and the structural unit (c2) in the polymer block (C) is preferably 60% by mass or more, more preferably 80% by mass or more, and is even more preferably 100% by mass.

(Bonding Mode)

The block copolymer (II) is a block copolymer (P) or a hydrogenated block copolymer (Q) containing at least one polymer block (A) and at least one polymer block (B).

The bonding mode of the polymer block (A) and the polymer block (B) is not specifically limited, and may be linear, branched, radial or a combination of two or more of them. Above all, it is preferred that the blocks bond linearly to each other.

Regarding the linear bonding mode, the polymer block (A) is expressed as A, and the polymer block (B) is as B, and examples of the bonding mode include $(A-B)_1$, $A-(B-A)_m$, or $B-(A-B)_n$. In these, 1, m and n each independently represent an integer of 1 or more.

In the case where the block copolymer (II) contains at least one polymer block (A) and at least one polymer block (B), the bonding mode preferably has the polymer block (A), the polymer block (B) and the polymer block (A) in that order, that is, preferred is a triblock copolymer represented by A-B-A.

Specifically, the block copolymer (II) is preferably a triblock copolymer represented by A-B-A, and the triblock copolymer may be an unhydrogenated one or a hydrogenated one.

In the case where the block copolymer (II) contains the polymer block (A), the polymer block (B) and the polymer block (C), the block copolymer (II) is preferably a block copolymer having at least one polymer block (B) at the end thereof, and the block copolymer may be an unhydrogenated one or a hydrogenated one. At least one polymer block (B) existing at the end of the polymer chain improves moldability. From this viewpoint, in the case where the block copolymer (II) is linear, more preferably, the copolymer has the polymer block (B) at both ends thereof. In the case where the block copolymer (II) is branched or radial, the number of the polymer blocks (B) existing at the end is preferably 2 or more, more preferably 3 or more.

Also preferably, the block copolymer (II) is a block copolymer containing at least two polymer blocks (A), at least one polymer block (B) and at least one polymer block (C), more preferably containing at least two polymer blocks (A), at least one polymer block (B) and at least one polymer block (C), and having one or more of at least one polymer block (B) at the end of the copolymer.

In the case where the block copolymer (II) contains the polymer block (A), the polymer block (B) and the polymer block (C), the bonding mode of the plural polymer blocks is not specifically limited, and may be linear, branched, radial or a combination of two or more of them. Above all, preferred is a mode of bonding the blocks linearly.

Preferably, the block copolymer (II) has a structure having the polymer block (B), the polymer block (A) and the polymer block (C) in that order (that is, a structure of B-A-C).

Specifically, the block copolymer (II) is preferably a tetra-block copolymer represented by B-A-C-A, a penta-block copolymer represented by B-A-C-A-B, or a copolymer represented by $B-A-(C-A)_p-B$, $B-A-(C-A-B)_q$, or $B-(A-C-A-B)_r$ (p, q and r each independently represent an integer of 2 or more), and above all, preferred is a penta-block copolymer represented by B-A-C-A-B.

Namely, the block copolymer (II) is preferably a penta-block copolymer represented by B-A-C-A-B, and the penta-block copolymer may be an unhydrogenated one or a hydrogenated one.

Here, in the present specification, in the case where the same kinds of polymer blocks bond linearly via a divalent coupling agent, all the bonding polymer blocks are treated as one polymer block. Accordingly, a polymer block that is, naturally strictly, to be expressed as A-X-A (X represents a coupling agent residue) is expressed as A as a whole. In the present specification, the polymer block of this type that contains a coupling agent residue is treated as above, and therefore, for example, a block copolymer that contains a coupling agent residue and is to be strictly expressed as B-A-C-X-C-A-B is expressed as B-A-C-A-B here, and is treated as one example of a penta-block copolymer.

The two or more polymer blocks (A) in the block copolymer (II) may be polymer blocks of the same structural unit, or may also be polymer blocks of different structural units. Similarly, in the case where the block copolymer (II) contains two or more polymer blocks (B) or two or more polymer blocks (C), the respective polymer blocks may be polymer blocks of the same structural unit or may also be polymer blocks of different structural units. For example, in the two polymer blocks (A) in the triblock copolymer represented by A-B-A, the respective aromatic vinyl compounds may be the same kind or may also be different kinds.

In the case where the block copolymer (II) contains the polymer block (A) and the polymer block (B) and does not contain the polymer block (C), the ratio by mass of the polymer block (A) to the polymer block (B), (A)/(B) is 1/99 to 70/30, preferably 5/95 to 60/40, more preferably 10/90 to 50/50, even more preferably 15/85 to 40/60, further more preferably 15/85 to 35/65. When the ratio falls within the range, a resin composition excellent in flexibility and excellent in grip performance can be obtained.

In the case where the block copolymer (II) contains the polymer block (A), the polymer block (B) and the polymer block (C), the ratio by mass of the polymer block (A) to the polymer block (B), (A)/(B) is 1/99 to 70/30, preferably 5/95 to 60/40, more preferably 10/90 to 50/50, even more preferably 20/80 to 40/60, further more preferably 25/75 to 35/65. When the ratio falls within the range, a resin composition excellent in flexibility and excellent in grip performance can be obtained.

In the block copolymer (II), preferably, the ratio by mass of the polymer block (A) to the total of the polymer block (B) and the polymer block (C), (A)/((B)+(C)) is preferably 1/99 to 70/30. When the ratio falls within the range, a resin composition having excellent tensile characteristics, moldability and grip performance can be obtained. From the viewpoint, the ratio by mass (A)/((B)+(C)) is more preferably 1/99 to 60/40, even more preferably 10/90 to 40/60, further more preferably 10/90 to 30/70, further more preferably 15/85 to 25/75.

In the case where the block copolymer (II) contains the polymer block (A), the polymer block (B) and the polymer block (C), the total content of the structural unit (b1) and the structural unit (c1) relative to the total amount of the polymer block (B) and the polymer block (C) in the block copolymer, ((b1)+(c1))/((B)+(C)) is, from the viewpoint of excellent flexibility, tensile characteristics and grip performance, preferably 40 to 90% by mass, more preferably 50 to 80% by mass, even more preferably 60 to 70% by mass.

In the case where the block copolymer (II) contains the polymer block (A) and the polymer block (B) and does not contain the polymer block (C), the total content of the polymer block (A) and the polymer block (B) in the block copolymer is preferably 80% by mass or more, more preferably 90% by mass or more, even more preferably 95% by mass or more, and further more preferably 100% by mass.

In the case where the block copolymer (II) contains the polymer block (A), the polymer block (B) and the polymer block (C), the total content of these polymer blocks (A) to (C) in the block copolymer is preferably 80% by mass or more, more preferably 90% by mass or more, even more preferably 95% by mass or more, and further more preferably 100% by mass.

One example of preferred embodiments of the block copolymer (II) is, from the viewpoint of non-slippiness and wear resistance as well as flexibility, tear strength and tensile characteristics:

a hydrogenated block copolymer (Q) prepared by hydrogenating a block copolymer (P) containing the polymer block (A), the polymer block (B) and the polymer block (C), wherein

the polymer block (C) is a polymer block in which the content of the farnesene-derived structural unit (c1) is 0% by mass or more and less than 1% by mass, and the content of the structural unit (c2) derived from a conjugated diene except farnesene is 1 to 100% by mass,

the ratio by mass of the polymer block (A) to the total amount of the polymer block (B) and the polymer block (C), (A)/((B)+(C)) is 10/90 to 30/70,

the copolymer contains least two polymer blocks (A), at least one polymer block (B) and at least one polymer block (C), and has at least one polymer block (B) at the end thereof, and

the hydrogenation ratio of the carbon-carbon double bond in the conjugated diene-derived structural unit in the hydrogenated block copolymer (Q) is 70 mol% or more.

(Polymer Block formed of other monomer)

The block copolymer (II) may contain a polymer block formed of any other monomer, in addition to the polymer block (A), the polymer block (B) and the polymer block (C), so far as it does not detract from the advantageous effects of the present invention.

Examples of such other monomers include unsaturated hydrocarbon compounds such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene; and functional group-containing unsaturated compounds such as acrylic acid, methacrylic acid, methyl acrylate, methyl methacrylate,

acrylonitrile, methacrylonitrile, maleic acid, fumaric acid, crotonic acid, itaconic acid, 2-acryloylethanesulfonic acid, 2-methacryloylethanesulfonic acid, 2-acrylamide-2-methylpropanesulfonic acid, 2-methacrylamide-2-methylpropanesulfonic acid, vinylsulfonic acid, vinyl acetate, and methyl vinyl ether. One alone or two or more kinds of these may be used either singly or as combined.

In the case where the block copolymer (II) has such other polymer block, the content thereof is preferably 10% by mass or less, more preferably 5% by mass or less.

(Production Method for Block Copolymer (II))

In the case where the block copolymer (II) is, for example, a block copolymer (P) containing the polymer block (A) and the polymer block (B), or is, when containing the polymer block (C), a block copolymer (P) containing the polymer block (A), the polymer block (B) and the polymer block (C), the copolymer can be favorably produced according to an anionic polymerization process. Further, in the case where the block copolymer (II) is a hydrogenated block copolymer (Q), the copolymer can be favorably produced according to a process of hydrogenating the carbon-carbon double bond in the conjugated diene-derived structural unit in the block copolymer (P).

<Polymerization Process>

The block copolymer (P) can be produced according to a solution polymerization method or a method described in JP2012-502135(T) and JP2012-502136(T). Among these, a solution polymerization method is preferred, and a known method, for example, an ionic polymerization method of anionic polymerization or cationic polymerization, or a radical polymerization method is applicable. Among these, an anionic polymerization method is preferred. In an anionic polymerization method, an aromatic vinyl compound, a farnesene and/or a conjugated diene except farnesene are successively added in the presence of a solvent, anionic polymerization initiator and optionally a Lewis base to obtain the block copolymer (P).

Examples of the anionic polymerization initiator include alkali metals such as lithium, sodium and potassium; alkaline earth metals such as beryllium, magnesium, calcium, strontium and barium; lanthanoid rare earth metals such as lanthanum and neodymium; and compounds containing any of the above-mentioned alkali metals, alkaline earth metals, and lanthanoid rare earth metals. Above all, preferred are compounds containing any of alkali metals and alkaline earth metals, and more preferred are organic alkali metal compounds.

Examples of the organic alkali metal compounds include organic lithium compounds such as methyl lithium, ethyl lithium, n-butyl lithium, sec-butyl lithium, t-butyl lithium, hexyl lithium, phenyl lithium, stilbene lithium, dilithiomethane, dilithionaphthalene, 1,4-dilithiobutane, 1,4-dilithio-2-ethylcyclohexane, and 1,3,5-trilithiobenzene; and sodium naphthalene and potassium naphthalene. Above all, preferred are organic lithium compounds, more preferred are n-butyl lithium and sec-butyl lithium, and even more preferred is sec-butyl lithium. The organic alkali metal compound can be reacted with a secondary amine such as diisopropylamine, dibutylamine, dihexylamine or dibenzylamine to be an organic alkali metal amide for use herein.

The amount of the organic alkali metal compound to be used in polymerization varies depending on the molecular weight of the block copolymer (P), but is generally within a range of 0.01 to 3% by mass relative to the total amount of the aromatic vinyl compound, farnesene and the other conjugated diene than farnesene.

The solvent is not specifically limited so far as it has no negative influence on the anionic polymerization reaction, and examples thereof include saturated aliphatic hydrocarbons such as n-pentane, isopentane, n-hexane, n-heptane and isooctane; saturated alicyclic hydrocarbons such as cyclopentane, cyclohexane and methylcyclopentane; and aromatic hydrocarbons such as benzene, toluene and xylene. One alone or two or more kinds of these may be used either singly or as combined. The amount of the solvent to be used is not specifically limited.

The Lewis base plays a role of controlling the microstructure in the structural unit derived from farnesene and the structural unit derived from the conjugated diene except farnesene. Examples of such Lewis bases include ether compounds such as dibutyl ether, diethyl ether, tetrahydrofuran, dioxane and ethylene glycol diethyl ether; pyridine; tertiary amines such as N,N,N',N'-tetramethylethylenediamine and trimethylamine; alkali metal alkoxides such as potassium t-butoxide; and phosphine compounds. In the case where the Lewis base is used, the amount thereof is, in general, preferably within a range of 0.01 to 1000 molar equivalents relative to 1 mol of the anionic polymerization initiator.

The polymerization reaction temperature is generally within a range of - 80 to 150°C or so, preferably 0 to 100°C, more preferably 10 to 90°C. The polymerization reaction mode may be a batchwise mode or a continuous mode. The monomers are continuously or intermittently fed into a polymerization reaction solution so that the amount of the aromatic vinyl compound, the farnesene and/or the other conjugated diene than farnesene could fall within a specific range, or the monomers are successively polymerized so that they could be in a specific ration in the polymerization reaction solution, and in that manner, the block copolymer (P) can be produced.

The polymerization reaction can be terminated by adding an alcohol such as methanol or isopropanol as a

polymerization terminator. The resultant polymerization reaction solution is poured into a poor solvent such as methanol to precipitate the block copolymer (P), or the polymerization reaction solution is washed with water, separated and dried to isolate the block copolymer (P).

The block copolymer (II) preferably contains a structure having the polymer block (B), the polymer block (A) and the polymer block (C) in that order, as described above. Accordingly, more preferably, the hydrogenated block copolymer (II) is produced according to a method including a step of polymerizing the polymer block (B), the polymer block (A) and the polymer block (C) in that order to obtain the block copolymer (P), and in the case of producing a hydrogenated product, further including a step of hydrogenating the resultant block copolymer (P) to obtain the hydrogenated block copolymer (Q).

In the case where the block copolymer (II) has the polymer block (B) at one terminal alone of the polymer chain, the copolymer may also be produced according to a method of polymerizing the other polymer blocks so as to bond them in a linear manner, and then finally producing the polymer block (B).

In the case where the block copolymer (II) is a block copolymer (P) containing at least two polymer blocks (A), at least one polymer block (B) and at least one polymer block (C) and having at least one polymer block (B) at the terminal, or is a hydrogenated block copolymer (Q) thereof, the method for producing the block copolymer (P) of that type includes:

[i] a method of polymerizing the polymer block (B), the polymer block (A), the polymer block (C) and the polymer block (A) in that order, and
[ii] a method of polymerizing the polymer block (B), the polymer block (A) and the polymer block (C) in that order, and coupling the terminals of the polymer blocks (C) using a coupling agent.

In the present embodiment, from the viewpoint of efficiently producing the copolymer, the latter method [ii] using a coupling agent is preferred.

Examples of the coupling agent include divinylbenzene; polyepoxy compounds such as epoxidized 1,2-polybutadiene, epoxidized soybean oil, and tetraglycidyl-1,3-bisaminomethylcyclohexane; halides such as tin tetrachloride, tetrachlorosilane, trichlorosilane, trichloromethylsilane, dichlorodimethylsilane, and dibromodimethylsilane; ester compounds such as methyl benzoate, ethyl benzoate, phenyl benzoate, diethyl oxalate, diethyl malonate, diethyl adipate, dimethyl phthalate, and dimethyl terephthalate; carbonate compounds such as dimethyl carbonate, diethyl carbonate, and diphenyl carbonate; alkoxysilane compounds such as diethoxydimethylsilane, trimethoxymethylsilane, triethoxymethylsilane, tetramethoxysilane, tetraethoxysilane, tetrabutoxysilane, tetrakis(2-ethylhexyloxy)silane, bis(triethoxysilyl) ethane, and 3-aminopropyltriethoxysilane; and 2,4-tolylenediisocyanate.

In the polymerization step, an unmodified block copolymer can be obtained as mentioned above, but a modified block copolymer may also be obtained in the following manner.

In the case of a modified block copolymer, the block copolymer (P) may be modified before the hydrogenation step to be mentioned hereinunder. Examples of introducible functional groups include an amino group, an alkoxysilyl group, a hydroxy group, an epoxy group, a carboxy group, a carbonyl group, a mercapto group, an isocyanate group, and an acid anhydride group.

Examples of the modification method for the block copolymer (P) include a method of adding a coupling agent such as tin tetrachloride, tetrachlorosilane, dichlorodimethylsilane, dimethyldiethoxysilane, tetramethoxysilane, tetraethoxysilane, 3-aminopropyltriethoxysilane, tetraglycidyl-1,3-bisaminomethylcyclohexane, and 2,4-tolylene diisocyanate, or a polymerization terminal modifier such as 4,4'-bis(diethylamino)benzophenone or N-vinylpyrrolidone, or any other modifier described in JP2011-132298(A) that can react with the polymerization active terminal, before adding a polymerization terminator. Also employable is a method of grafting the isolated copolymer with maleic anhydride.

The position to which the functional group is introduced may be the polymerization terminal of the block copolymer (P), or side chains thereof. One alone or two or more kinds of the functional groups can be used either singly or as combined. Preferably, the amount of the modifier to be used is within a range of 0.01 to 10 molar equivalents relative to one mol of the anionic polymerization initiator.

(Hydrogenation Step)

Regarding the block copolymer (II), the block copolymer (P) or the modified block copolymer obtained according to the above-mentioned method may be hydrogenated to obtain a hydrogenated block copolymer (Q).

Any known method is employable for hydrogenation. For example, the block copolymer (P) is dissolved in a solvent not having any influence on hydrogenation, and the resulting solution is hydrogenated in the presence of a Ziegler catalyst; or a nickel, platinum, palladium, ruthenium or rhodium metal catalyst supported on carbon, silica or diatomaceous earth; or an organic metal complex having a cobalt, nickel, palladium, rhodium or ruthenium metal, serving as a hydrogenation catalyst.

In the hydrogenation step, a hydrogenation catalyst may be added for the hydrogenation to the polymerization

reaction solution that contains the block copolymer obtained according to the above method of producing the block copolymer (P). In the present invention, the hydrogenation catalyst is preferably a palladium carbon having palladium supported on carbon.

In the hydrogenation reaction, the hydrogen pressure is preferably 0.1 to 20 MPa, the reaction temperature is preferably 100 to 200°C, and the reaction time is preferably 1 to 20 hours.

One preferred embodiment of the block copolymer (II) is a hydrogenated block copolymer (Q) where 70 mol% or more of the carbon-carbon double bond in the conjugated diene-derived structural unit has been hydrogenated. From the viewpoint of exhibiting heat resistance, weather resistance and excellent tear strength by crosslinking, the hydrogenation ratio of the carbon-carbon double bond in the conjugated diene-derived structural unit is preferably 70 to 98 mol%, more preferably 70 to 97 mol%, even more preferably 80 to 96 mol%, further more preferably 85 to 96 mol%, and especially more preferably 87 to 96 mol%.

The hydrogenation ratio is a hydrogenation ratio of the carbon-carbon double bond in all the conjugated diene-derived structural units existing in the block copolymer (P).

For example, the carbon-carbon double bond in the conjugated diene-derived structural unit existing in the block copolymer (P) includes the carbon-carbon double bond in the conjugated diene-derived structural unit in the polymer block (B), and in the case where the block copolymer (P) further contains the polymer block (C), it includes the carbon-carbon double bond in the conjugated diene-derived structural units in the polymer block (B) and the polymer block (C).

In the case where the hydrogenated block copolymer (Q) contains the polymer block (B) and the polymer block (C), preferably, the hydrogenation ratios of the carbon-carbon double bonds in the conjugated diene-derived structural unit differ between the polymer block (B) and the polymer block (C). The difference in the hydrogenation ratios of the carbon-carbon double bonds in the conjugated diene-derived structural unit between the polymer block (B) and the polymer block (C) may be, for example, 1 to 20 mol%, or may be 3 to 15 mol%, or may be 5 to 10 mol%. When the hydrogenation ratio differs, the crosslinking degrees with the crosslinking agent (II) to be mentioned below can differ between the polymer blocks (B) and (C), and accordingly, it is considered that the soft part and the hard part can exist in the hydrogenated block copolymer (Q) and therefore excellent effects of tear strength and tensile characteristics can be thereby exhibited. From the viewpoint of exhibiting remarkably excellent tensile characteristics, preferably, the hydrogenation ratio of the polymer block (C) is higher than that of the polymer block (B).

In the present specification, the polymer block (B) and the polymer block (C) in the hydrogenated block copolymer (Q) are hydrogenated, but like before the hydrogenation, these are expressed as "polymer block (B)" and "polymer block (C)".

The hydrogenation ratio of the carbon-carbon double bond in the conjugated diene-derived structural unit in the polymer block (B) in the hydrogenated block copolymer (Q) is preferably 70 to 98 mol%, more preferably 70 to 95 mol%, even more preferably 70 to 95 mol%, further more preferably 70 to 95 mol%, and especially more preferably 80 to 95 mol%.

In the case where the block copolymer (P) contains the polymer block (C), the hydrogenation ratio of the carbon-carbon double bond in the conjugated diene-derived structural unit in the polymer block (C) in the hydrogenated block copolymer (Q) is preferably 95 to 99.9 mol%, more preferably 96 to 99.5 mol%, even more preferably 97 to 99.5 mol%.

The hydrogenation ratio can be calculated by measuring $^1$H-NMR of the block copolymer (P) and the hydrogenated block copolymer (Q) after hydrogenation.

The peak top molecular weight (Mp) of the block copolymer (P) is, from the viewpoint of moldability, preferably 4,000 to 1,500,000, more preferably 9,000 to 1,000,000, even more preferably 30,000 to 800,000, further more preferably 50,000 to 500,000.

The molecular weight distribution (Mw/Mn) of the block copolymer (P) is preferably 1 to 6, more preferably 1 to 4, even more preferably 1 to 3, further more preferably 1 to 2. When the molecular weight distribution falls within the range, the viscosity of the block copolymer (P) fluctuates little and the copolymer is easy to handle.

The peak top molecular weight (Mp) of the hydrogenated block copolymer (Q) is, from the viewpoint of moldability, preferably 4,000 to 1,500,000, more preferably 9,000 to 1,000,000, even more preferably 30,000 to 800,000, further more preferably 50,000 to 500,000.

The molecular weight distribution (Mw/Mn) of the hydrogenated block copolymer (Q) is preferably 1 to 6, more preferably 1 to 4, even more preferably 1 to 3, further more preferably 1 to 2. When the molecular weight distribution falls within the range, the viscosity of the hydrogenated block copolymer (Q) fluctuates little and the copolymer is easy to handle.

In the present specification, the peak top molecular weight (Mp) and the molecular weight distribution (Mw/Mn) means the values measured according to the method described in the section of Examples given hereinunder.

The peak top molecular weight of the polymer block (A) is, from the viewpoint of moldability, preferably 2,000 to 100,000, more preferably 4,000 to 80,000, even more preferably 5,000 to 50,000, further more preferably 6,000 to 30,000.

The peak top molecular weight of the polymer block (B) is, from the viewpoint of moldability, preferably 2,000 to 200,000, more preferably 3,000 to 150,000, even more preferably 4,000 to 100,000.

Further, the peak top molecular weight of the polymer block (C) is, from the viewpoint of moldability, preferably

4,000 to 200,000, more preferably 4,500 to 150,000, even more preferably 5,000 to 100,000.

The block copolymer (II) is characterized in that it readily repels water. Specifically, the "water repellency" can be evaluated by dripping water onto a quartz plate, then setting a molded article of the block copolymer (II) thereon, and applying pressure onto the molded article. In that condition, the behavior of water is observed from the side of the quartz plate. A molded article of the block copolymer (II) can repel almost all water existing between the molded article and the quartz plate.

More specifically, the water repellency can be evaluated according to the method described in the section of Examples.

[Crosslinking Agent (III)]

The resin composition of the present embodiment contains a crosslinking agent (III).

The crosslinking agent (III) is preferably one capable of crosslinking with the carbon-carbon double bond in a conjugated diene-derived structural unit or α-methylene thereof. Here, the α-methylene indicates a methylene adjacent to a carbon-carbon double bond. Containing such a crosslinking agent (III), the carbon-carbon double bond in the block copolymer (II) (or the residue of carbon-carbon double bond when the copolymer is hydrogenated) or the α-methylene of the carbon-carbon double bond alone can be crosslinked to provide non-slippiness and excellent wear resistance while maintaining excellent flexibility, and is expected to also provide good tensile characteristics and tear strength.

Examples of the crosslinking agent (III) include a radical generator, sulfur and a sulfur-containing compound. From the viewpoint of tear strength and tensile characteristics, sulfur and/or a sulfur compound are more preferred, and sulfur is even more preferred.

Examples of the radical generator include organic peroxides such as dicumyl peroxide, di-t-butyl peroxide, 2,5-dimethyl-2,5-di(t-butylperoxy)hexane, 2.5-dimethyl-2, 5-di(t-butylperoxy)hexyne-3, 1,3-bis(t-butylperoxyisopropyl)benzene, α,α'-bis(t-butylperoxy)diisopropylbenzene, 3,3,5-trimethylcyclohexane, n-butyl 4,4-bis(t-butylperoxy)valerate, benzoyl peroxide, p-chlorobenzoyl peroxide, 2,4-dichlorobenzoyl peroxide, t-butylperoxy benzoate, t-butylperoxyisopropyl carbonate, diacetyl peroxide, lauroyl peroxide, and t-butylcumyl peroxide. One alone or two or more kinds of these can be used either singly or as combined.

Sulfur can be used with no specific limitation, and can be, for example, any of fine powder sulfur, precipitated sulfur, colloidal sulfur and insoluble sulfur.

Examples of the sulfur compound include sulfur monochloride, sulfur dichloride, disulfide compounds, and triazinethioles.

As the crosslinking agent (III), in addition, also usable are phenolic resins such as alkylphenol resins, and brominated alkylphenol resins; and a combination of p-quinone dioxime and lead dioxide, or p,p'-dibenzoylquinoe dioxime and trilead tetraoxide.

[Content]

The mass ratio of the rubber (I) to the block copolymer (II), (I)/(II) is 99/1 to 55/45. When the mass ratio (I)/(II) is outside the above range, excellent wear resistance cannot be attained. When the mass ratio is within the range, exhibition of non-slippiness becomes more remarkable. Namely, when the mass ratio falls within the range, the resin composition can provide a molded article which is hardly slippery and excellent in wear resistance. Further, for more remarkably improving non-slippiness such as dry grip performance and wet grip performance and further improving wear resistance, the mass ratio is preferably 99/1 to 60/40, preferably 99/1 to 65/35, preferably 99/1 to 70/30, and preferably 95/5 to 70/30.

Containing the block copolymer (II), the resin composition is given flexibility, and increasing the content ratio of the block copolymer (II) tends to improve grip performance. Surprisingly, however, it has been found that, within the specific range of the mass ratio (I)/(II) as above, grip performance increases as the content ratio of the rubber (I) increases than the block copolymer (II). In addition, excellent wear resistance can also be exhibited, and therefore the resin composition of the present embodiment can provide a molded article excellent both in non-slippiness and wear resistance.

The content of the crosslinking agent (III) is, from the viewpoint of more bettering non-slippiness and wear resistance and also exhibiting the balance of flexibility, tear strength and tensile characteristics, preferably 0.1 to 10 parts by mass relative to 100 parts by mass of the total content of the rubber (I) and the block copolymer (II), more preferably 0.5 to 6.0 parts by mass, even more preferably 1.0 to 4.0 parts by mass, further more preferably 1.5 to 2.5 parts by mass.

The total content of the rubber (I), the block copolymer (II) and the crosslinking agent (III) in the resin composition of the present embodiment is, from the viewpoint of more bettering non-slippiness and wear resistance and also exhibiting the balance of flexibility, tear strength and tensile characteristics, preferably 60 to 80% by mass, more preferably 65 to 80% by mass.

[Others]

(Silica)

Preferably, the resin composition of the present embodiment contains silica. Examples of silica include wet-process silica (hydrous silicic acid), dry-process silica (anhydrous silicic acid), calcium silicate, and aluminum silicate. Among these silicas, preferred is wet-process silica from the viewpoint of moldability and of further improving mechanical strength and wear resistance of the molded article to be obtained to thereby further improve the non-slippiness such as dry grip performance and wet grip performance. One alone or two or more kinds of these silicas can be used either singly or as combined.

From the viewpoint of more bettering grip performance, the specific surface area of silica is preferably 20 $m^2/g$ or more, more preferably 50 $m^2/g$ or more, even more preferably 100 $m^2/g$ or more, further more preferably 150 $m^2/g$ or more. The upper limit of the specific surface area of silica may fall within any range not detracting from the advantageous effects of the present invention. Silicas different in the specific surface area can be used as combined. In particular, for more remarkably exhibiting non-slippiness such as dry grip performance, wet grip performance and ice grip performance, silica whose specific surface area is 150 $m^2/g$ or more is preferably contained. The remarkably exhibiting grip performance can be expected so far as a part of silica that the resin composition contains (for example, 50% by mass or more of the total amount of silica in the resin composition) has a specific surface area of 150 $m^2/g$ or more, even when silica whose specific surface area is less than 150 $m^2/g$ is partly used in the resin composition.

The specific surface area of silica can be measured, for example, according to the BET method.

The silica content is preferably 1 to 50 parts by mass relative to 100 parts by mass of the total of the rubber (I) and the block copolymer (II), more preferably 10 to 45 parts by mass, even more preferably 20 to 40 parts by mass. When the silica content falls within the range, mechanical strength such as excellent tear strength can be exhibited, and grip performance and wear resistance can be further improved.

(Silane Coupling Agent)

The resin composition of the present embodiment preferably contains a silane coupling agent.

Examples of the silane coupling agent include a sulfide compound, a mercapto compound, a vinyl compound, an amino compound, a glycidoxy compound, a nitro compound and a chloro compound.

From the viewpoint of reactivity with silica, the silane coupling agent preferably has an alkoxysilyl group, and is especially preferable a methoxysilane and an ethoxysilane. One alone or two or more kinds of these silane coupling agents can be used either singly or as combined.

Examples of the sulfide compound include bis(3-triethoxysilylpropyl) tetrasulfide, bis(2-triethoxysilylethyl) tetrasulfide, bis(3-trimethoxysilylpropyl) tetrasulfide, bis(2-trimethoxysilylethyl) tetrasulfide, bis(3-triethoxysilylpropyl) trisulfide, bis(3-trimethoxysilylpropyl) trisulfide, bis(3-triethoxysilylpropyl) disulfide, bis(3-trimethoxysilylpropyl) disulfide, 3-trimethoxysilylpropyl-N,N-dimethylthiocarbamoyl tetrasulfide, 3-triethoxysilylpropyl-N,N-dimethylthiocarbamoyl tetrasulfide, 2-trimethoxysilylethyl-N,N-dimethylthiocarbamoyl tetrasulfide, 3-trimethoxysilylpropylbenzothiazole tetrasulfide, 3-triethoxysilylpropylbenzothiazole tetrasulfide, 3-triethoxysilylpropyl methacrylate monosulfide, and 3-trimethoxysilylpropyl methacrylate monosulfide.

Examples of the mercapto compound include 3-mercaptopropyltrimethoxysilane, 3-mercaptopropyltriethoxysilane, 3-mercaptopropyl-di(tridecane-1-oxy-13-penta(ethylene oxide)) ethoxysilane, 2-mercaptoethyltrimethoxysilane and 2-mercaptoethyltriethoxysilane.

Examples of the vinyl compound include vinyltriethoxysilane, and vinyltrimethoxysilane.

Examples of the amino compound include 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane.

Examples of the glycidoxy compound include γ-glycidoxypropyltriethoxysilane, γ-glycidoxypropyltrimethoxysilane, γ-glycidoxypropylmethyldiethoxysilane, and γ-glycidoxypropylmethyldimethoxysilane.

Examples of the nitro compound include 3-nitropropyltrimethoxysilane, and 3-nitropropyltriethoxysilane.

Examples of the chloro compound include 3-chlorpropyltrimethoxysilane, 3-chloropropyltriethoxysilane, 2-chloroethyltrimethoxysilane, and 2-chloroethyltriethoxysilane.

Among these silane coupling agents, from the viewpoint of wear resistance, preferred are bis(3-triethoxysilylpropyl) disulfide, bis(3-triethoxysilylpropyl) tetrasulfide, 3-mercaptopropyltrimethoxysilane, and 3-mercaptopropyltriethoxysilane.

The content of the silane coupling agent is preferably 0.01 to 30 parts by mass relative to 100 parts by mass of silica, more preferably 0.05 to 25 parts by mass, even more preferably 1 to 20 parts by mass, further more preferably 3 to 15 parts by mass. When the content of the silane coupling agent falls within the range, dispersibility in the composition and wear resistance improve more.

(Polyolefin Resin)

The resin composition of the present embodiment does not contain a polyolefin resin, or the content of a polyolefin resin, if any therein, is preferably less than 10 parts by mass relative to 100 parts by mass of the block copolymer (II). When the content is less than 10 parts by mass, the resin composition can be favorably melt-kneaded. More preferably, the resin composition of the present invention does not contain a polyolefin resin.

Examples of the polyolefin resin that can be in the resin composition include polyethylene, polypropylene, polybutene-1, polyhexene-1, poly-3-methylbutene-1, poly-4-methyl-pentene-1, ethylene-vinyl acetate copolymer, and ethylene-acrylic acid copolymer.

(Crosslinking Accelerator)

The resin composition of the present embodiment may contain a crosslinking accelerator.

Examples of the crosslinking accelerator include thiazoles such as N,N-diisopropyl-2-benzothiazole-sulfenamide, 2-mercaptobenzothiazole, di-2-benzothiazolyl disulfide, and 2-(4-morpholinodithio)benzothiazole; guanidines such as diphenylguanidine, and triphenylguanidine; aldehyde-amine reaction products or aldehyde-ammonia reaction products such as butylaldehyde-aniline reaction products, and hexamethylenetetramine-acetaldehyde reaction products; imidazolines such as 2-mercaptoimidaozline; thioureas such as thiocarbanilide, diethylurea, dibutylthiourea, trimethylthiourea, and diorthotolylthiourea; thiuram-mono or polysulfides such as tetramethylthiuram monosulfide, tetramethylthiuram disulfide, and pentamethylenethiuram tetrasulfide; thiocarbamates such as zinc dimethyldithiocarbamate, zinc ethylphenyldithiocarbamate, sodium dimethyldithiocarbamate, selenium dimethyldithiocarbamate, and tellurium diethyldithiocarbamate; xanthates such as zinc dibutylxanthate; and salicylic acid. One alone or two or more kinds of these crosslinking accelerators can be used either singly or as combined.

The content of the crosslinking accelerator is preferably 0.05 to 15.0 parts by mass relative to 100 parts by mass of the total of the rubber (I) and the block copolymer (II), more preferably 0.1 to 5.0 parts by mass, even more preferably 0.5 to 4.0 parts by mass.

(Filler)

The resin composition of the present embodiment may contain a filler except the above-mentioned silica. As the filler, an inorganic filler and/or an organic filler are usable. Preferred examples of the inorganic filler include silicate compounds and metal oxides. The silicate compound is preferably one or more silicate compounds selected from kaolin, talc, clay, pyrophyllite, mica, montmorillonite, bentonite, wollastonite, sepiolite, xonotlite, zeolite, diatomaceous earth, and halloysite. The metal oxide is one or more metal oxides selected from titanium oxide, iron oxide, magnesium oxide, aluminum oxide, cerium oxide, antimony oxide, tin oxide, lead oxide, chromium oxide, cobalt oxide, tungsten oxide and copper oxide.

Preferred examples of the organic filler include a particulate organic filler and/or a fibrous organic filler. Preferred examples of the particulate organic filler include at least one or more organic fillers selected from the group consisting of urethane fine particles, acryl fine particles, styrene fine particles, acryl/styrene fine particles, styrene-olefin fine particles, fluorine-based fine particles, polyethylene fine particles and silicone fine particles. From the viewpoint of moldability of the composition, the average particle size of the particulate organic filler is preferably 2 to 50 μm. The average particle size can be measured in a laser diffraction method according to JIS Z 8825-1.

As the fibrous organic filler, various organic fibers are usable, and preferred examples thereof include synthetic fibers such as 6-nylon fibers, 6,6-nylon fibers, 4,6-nylon fibers, aromatic polyamide fibers, para-aramid fibers, meta-aramid fibers, polyethylene terephthalate (PET) fibers, polyethylene naphthalate (PEN) fibers, polyparaphenylene-benzoxazole (PBO) fibers, PVA fibers (vinylon), polyarylene sulfide fibers, 2,6-hydroxynaphthoate/parahydroxybenzoate fibers (Vectran), polyethylene (PE) fibers, polypropylene (PP) fibers, polylactate (PLA) fibers, polybutylene succinate (PBS) fibers, polyethylene succinate fibers, syndiotactic-1,2-polybutadiene (SPB) fibers, and polyvinyl chloride (PVC) fibers; and natural (regenerated) fibers such as cotton, hemp, rayon and cellulose fibers.

The organic fibers can be roughly grouped into organic microfibers and organic nanofibers depending on the average fiber diameter thereof. Organic microfibers are organic fibers having an average fiber diameter on the order of micrometers, and the average fiber diameter thereof is preferably 1 to 200 μm, more preferably within a range of 10 to 100 μm, even more preferably within a range of 15 to 90 μm. The average fiber length of the organic microfibers is not specifically limited, but is preferably within a range of 0.1 to 20 mm, more preferably within a range of 0.5 to 15 mm, even more preferably within a range of 1 to 10 mm. Having such an average fiber diameter and such an average length, the resulting resin composition containing such organic microfibers is excellent in the balance between processability of the resin composition and the effect of improving the resultant wet grip performance.

Organic nanofibers are organic fibers having an average fiber diameter on the order of nanometers, and the

average fiber diameter thereof is preferably within a range of 1 to 900 nm, more preferably within a range of 1 to 700 nm, even more preferably within a range of 1 to 500 nm. The average fiber length of the organic nanofibers is preferably within a range of 0.1 to 1000 μm, more preferably within a range of 1 to 750 μm, even more preferably within a range of 5 to 600 μm.

The kind of the organic microfibers and the organic nanofibers is not specifically limited, but preferred are polyethylene terephthalate (PET) fibers, PVA fibers (vinylon), 2,6-hydroxynaphthoate/parahydroxybenzoate fibers (Vectran), polylactate (PLA) fibers, and cellulose fibers. From the viewpoint of the effect of improving grip performance, more preferred are PVA fibers (vinylon) and cellulose fibers, and even more preferred are cellulose fibers. Preferred examples of organic microfibers formed of cellulose fibers include cellulosic microfibers sold as a trade name of "ARBOCEL" by Rettenmaier Japan Co., Ltd. Also preferred examples of organic nanofibers formed of cellulose fibers are cellulosic nanofibers such as CELISH KY-100G (average fiber length: 500 μm, average fiber diameter: 20 nm, solid content: 10% by mass) by Daicel Finechem Ltd.

The content of the filler is preferably 0 to 120 parts by mass relative to 100 parts by mass of the total content of the rubber (I) and the block copolymer (II), and can be 0.5 to 80 parts by mass, or can be 1 to 50 parts by mass, or can be 1 to 30 parts by mass.

(Softener)

The resin composition of the present embodiment may contain a softener within a range not detracting from the advantageous effects of the invention. However, since the resin composition has sufficient flowability for molding, as having the above-mentioned constitution, it may not contain a softener. In particular, among softeners, oil-based softeners such as paraffin-based, naphthene-based and aromatic process oils, as well as mineral oil and white oil may have a risk of bleeding out with time when the resin composition is formed into molded articles, and therefore, it is preferable that such an oil-based softener is not contained in the resin composition.

Examples of the softener that can be contained include phthalate derivatives such as dioctyl phthalate and dibutyl phthalate; liquid oligomers of ethylene and an α-olefin; liquid paraffin; polybutene; low-molecular-weight polyisobutylene; liquid polydienes and hydrogenated or modified products thereof such as liquid polybutadiene, liquid polyisoprene, liquid β-polyfarnesene, liquid polyisoprene/butadiene copolymer, liquid isoprene/β-farnesene, liquid butadiene/β-farnesene, liquid styrene/butadiene copolymer, and liquid styrene/isoprene copolymer.

The content of the softener, if any, is preferably 0.1 to 30% by mass in the resin composition, more preferably 0.5 to 20% by mass, even more preferably 1.0 to 15% by mass.

(Other Additives)

Any other additive than those mentioned above can be added to the resin composition of the present embodiment within a range not detracting from the advantageous effects of the invention. Examples of the other additive include a thermal aging inhibitor, an antioxidant, a light stabilizer, an antistatic agent, a release agent, a flame retardant, a foaming agent, a pigment, a dye, and a whitener. One alone or two or more kinds of these additives can be used either singly or as combined.

[Production Method for Rein Composition]

Regarding the production method for the resin composition of the present embodiment, for example, constituent components except the crosslinking agent (III) and a crosslinking accelerator that may be optionally added are melt-kneaded, and then crosslinked according to the crosslinking method to be mentioned below to obtain the resin composition.

The method of melt-kneading the constituent component except the crosslinking agent (III) and a crosslinking accelerator that may be optionally added is not specifically limited. One example is a method of melt-kneading the rubber (I), the block copolymer (II) and other optional components all at a time in a melt-kneading device, for example, a single-screw extruder, a multi-screw extruder, a Banbury mixer, a Brabender mixer, an open roll, a heating roll or various kneaders. As other examples, there can be mentioned a method of feeding the rubber (I), the block copolymer (II) and other optional components separately from different feeding hoppers and melt-kneading them, and a method of previously melt-kneading the block copolymer (II) and a part of optional components such as silica and a silane-coupling agent to obtain a melt-kneaded premix and then melt-kneading it with the other optional components.

The melt-kneading temperature can be arbitrarily selected generally within a range of 20 to 270°C.

As one example of the crosslinking method, after the above-mentioned melt-kneading step, the crosslinking agent (III) and a crosslinking accelerator that may be optionally added are added to the melt-kneaded premix, and using a vulcanization mold, the resultant mixture is kept heated at a vulcanization temperature of generally 120 to 200°C or so, preferably 140 to 200°C, and under a vulcanization pressure of generally 0.5 to 10 MPa or so, for a period of generally 1

minute to 2 hours, and is thus crosslinked.

[Physical Properties]

(Non-slippiness)

Non-slippiness of the resin composition of the present embodiment can be evaluated by the static friction coefficient to be measured according to ASTM D-1894. A preferred numerical range of the static friction coefficient varies depending on the kind of the rubber (I) to be used and therefore could not be indiscriminately defined, but a larger numerical value of static friction coefficient means non-slippiness. For example, in the case of using SBR as the rubber (I), the static friction coefficient is, under dry conditions, preferably 4.5 or more, more preferably 5.0 or more. Under wet conditions, it is preferably 1.5 or more, more preferably 2.0 or more.
Dry conditions and wet conditions mean measurement conditions described in the section of Examples given hereinunder.

(Wear Resistance)

The wear resistance of the resin composition of the present embodiment can be evaluated by the wear volume measured using a DIN abrasion test (rotary drum abrasion tester) according to JIS K 6264-2:2005. The abrasion volume is preferably 200 $mm^3$ or less, more preferably 190 $mm^3$ or less, and can further be 180 $mm^3$ or less, or can be 170 $mm^3$ or less.

(Vulcanization Speed)

When using sulfur and/or a sulfur-containing compound as the crosslinking agent (III), the resin composition of the present embodiment can be excellent in the vulcanization speed. Namely, the time necessary for vulcanization (90% vulcanization time) is expected to be short.
When the vulcanization speed is high, the viscosity of the resin composition increases rapidly during vulcanization, and accordingly, the vulcanizing agent such as sulfur and/or a sulfur-containing compound, and also the crosslinking accelerator, the crosslinking aid, the antioxidant, the antiaging agent and the plasticizer such as a softener in the resin composition hardly bleed out on the surface of the rubber (I) and the block copolymer (II), and therefore the working mold can be prevented from being contaminated.
The vulcanization speed of the resin composition in the present specification is a time taken to reach 90% vulcanization amount (90% vulcanization time), for which the torque at 160°C of the resin composition is measured using an oscillating vulcanization tester (Curastometer) according to JIS K 6300-2:2001. The vulcanization speed Tc(90) of the resin composition is preferably 13 minutes or less, more preferably 12 minutes or less. The lower limit is not specifically limited, but is generally 1 minute or more.

(Specific Gravity)

The specific gravity of the resin composition of the present embodiment, as measured according to ISO 1183:1987, is preferably 0.88 to 1.30, more preferably 0.90 to 1.20. When the specific gravity falls within the above range, the molded article of the resin composition is not impractical. For example, when the resin composition is used for soles for footwear, it is not too heavy and the footwear using it is expected to be lighter.

(Hardness)

The hardness of the resin composition of the present embodiment, according to a Type A Durometer Method of JIS K 6253-2:2012 (hereinunder this may also be referred to as "hardness A"), is preferably 90 or less, more preferably 85 or less. The hardness A is preferably 25 or more, more preferably 30 or more, even more preferably 35 or more. When the hardness A falls within the above range, moldability is good and, owing to good flexibility, the friction force increases and grip performance and wear resistance are also excellent.

(Tensile Strength at break)

The tensile strength at break of the resin composition of the present embodiment, as measured according to JIS K 6251:2010, is preferably 5.0 MPa or more, more preferably 10.0 MPa or more, even more preferably 13.0 MPa or more. When the tensile strength at break is 5.0 MPa or more, tensile characteristics are good.

(Tensile Elongation at break)

The tensile elongation at break of the resin composition of the present embodiment, as measured according to JIS K 6251:2010, is preferably 100% or more, more preferably 150% or more, even more preferably 200% or more, further more preferably 370% or more. When the tensile elongation at break is 100% or more, tensile characteristics are good.

(Tear Strength)

The tear strength of the resin composition of the present embodiment, as measured according to JIS K 6252-1:2015, is preferably 2.0 kN/m or more, more preferably 2.5 kN/m or more, even more preferably 3.0 kN/m or more.

<Molded Article>

The molded article of the present invention is obtained using the above-mentioned resin composition.

The shape of the molded article may be any one that can be produced using the resin composition, and the resin composition can be molded into various shapes. Examples thereof include pellets, films, sheets, plates, pipes, tubes, rods and granules. The method for producing the molded article is not specifically limited, and the article can be produced according to conventionally-known various molding methods of, for example, injection molding, blow molding, compression molding, extrusion molding, and calendar molding. The resin composition is especially favorable for producing compression-molded articles.

The molded article is non-slippiness and excellent in wear resistance and is, in addition, expected to be excellent in the balance of tear strength and tensile characteristics, and is accordingly usable as molded items that are required to satisfy these characteristics. In particular, it is favorably used as molded items of shoe soles using the resin composition of the present embodiment as at least a part thereof.

Specifically, the molded article is favorably used as soles for footwear such as hiking boots, sandals, safety shoes, climbing shoes, marathon shoes, rubber-soled socks and high boots; sports articles such as swimming goggles, snorkels, skiing boots, skis and snowboards; various grips for writing materials such as pens and scissors, for tools and electric tools such as screwdrivers, pliers and wrenches, for wet areas articles such as tooth brushes and kitchen appliances (e.g., kitchen knives and spatulas), for goods for use for sports and fitness such as golf clubs, skiing stocks, cycles and bikes, and knives and the like; members of home electric appliances such as refrigerators, cleaners and waterproof bodies (e.g., mobile phones); automobile supplies such as side moldings, rack-and-pinion boots, suspension boots, constant velocity joint boots, weather strips, mud guards, floor mats, armrests, beltline moldings, flush mounting members and car interior and exterior (e.g., gears, knobs); tread members for tires, especially winter tires, studless tires, all-season tires, low rolling resistance tires and heavy-duty tires; business machines such as copying machine feeding rollers and winding rollers; members for use for furniture such as sofas and chair sheets; rubber members such as switch covers, stoppers, casters and rubber foot covers; building materials such as coated plywoods and coated steel plates; and industrial members such as industrial belts and industrial rubber hoses.

Examples

Hereinunder the present invention is specifically described with reference to Examples and Comparative Examples, but the present invention is not limited thereto. β-farnesene (purity 97.6% by mass, by Amyris Incorporated) was purified with 3Å Molecular Sieve and distilled in a nitrogen atmosphere to remove hydrocarbon impurities such as zingiberene, bisabolene, farnesene epoxide, farnesol isomers, E,E-farnesol, squalene, ergosterol and several kinds of dimers of farnesene, and used in the following polymerization.

<Rubber (I)>

Rubber (I): SBR

Trade name JSR 1502, by JSR Corporation, a styrene-butadiene copolymer rubber (E-SBR), produced by emulsion polymerization method, styrene content = 23.5% by mass.

<Block Copolymer (II)>

Hydrogenated block copolymer (II-1)

Hydrogenated block copolymer (II-1) in Production Example 1 to be mentioned below.

Hydrogenated block copolymer (II-2)

Hydrogenated block copolymer (II-2) in Production Example 2 to be mentioned below.

Unhydrogenated block copolymer (II'-1)

Unhydrogenated block copolymer (II'-1) in Production Example 3 to be mentioned below.

<Crosslinking Agent (III)>

Sulfur: Fine powder sulfur 200 mesh, by Tsurumi Chemical Industry Co., Ltd.

<Crosslinking Accelerator>

Crosslinking accelerator (1): trade name Nocceler CZ, by Ouchi Shinko Chemical Industrial Co., Ltd., N-cyclohexyl-2-benzothiazolylfenamide.
Crosslinking accelerator (2): trade name Nocceler TT, by Ouchi Shinko Chemical Industrial Co., Ltd., tetramethylthiuram disulfide.

<Silica>

Silica (1): trade name ULTRASIL 7000GR, by Evonik Degussa Japan, wet-process silica, BET method specific surface area 175 $m^2/g$.
Silica (2): trade name Nipsil VN3, by Tosoh Silica Co., Ltd., wet-process silica, BET method specific surface area 200 $m^2/g$.
Silica (3): trade name Nipsil ER, by Tosoh Silica Co., Ltd., wet-process silica, BET method specific surface area 70 to 100 $m^2/g$.

<Silane Coupling Agent>

Silane coupling agent (1): trade name Si75, by Evonik Degussa Japan, bis(3-triethoxysilylpropyl) disulfide.
Silane coupling agent (2): trade name Si69, by Evonik Degussa Japan, bis(3-triethoxysilylpropyl) tetrasulfide.
Silane coupling agent (3): trade name Silquest A189, by Momentive Performance Material Inc. 3-mercaptopropyltrimethoxysilane

<Other Additives>

Zinc oxide: Zinc Oxide Type 1, by Sakai Chemical Industrial Co., Ltd.
Stearic acid: trade name Lunac S-20, by Kao Corporation

[Measurement Methods]

Details of the measurement methods for the polymers obtained in Production Examples are as follows.

(1) Measurement of peak top molecular weight and molecular weight distribution

Regarding the peak top molecular weight (Mp) and the molecular weight distribution (Mw/Mn) of styrene blocks and polymers, each sample was determined by polystyrene standard according to GPC (gel permeation chromatography), and from the peak top of the molecular weight distribution, the peak top molecular weight (Mp) thereof was determined. The measurement devices and conditions are as mentioned below.

Device: by Tosoh Corporation, GPC device "HLC-8320GPC"
Separation column: by Tosoh Corporation, column "TSKgelSuperHZ4000"
Eluent: tetrahydrofuran
Eluent flow rate: 0.7 mL/min
Sample concentration: 5 mg/10 mL
Column temperature: 40°C

(2) Measurement method for hydrogenation ratio

(2-1) A block copolymer (P) and a hydrogenated block copolymer (II) (hereinunder expressed as "hydrogenated block copolymer (II)") were individually dissolved in a deuterated chloroform solvent, and using "Lambda-500" by JEOL Corporation, $^{1}$H-NMR thereof was measured at 50°C.

The carbon-carbon double bond hydrogenation ratio in the conjugated diene-derived structural unit in the hydrogenated block copolymer (II) was calculated from the peak of the proton of the carbon-carbon double bond appearing at 4.5 to 6.0 ppm in the resultant spectrum, according to the following formula.

Hydrogenation ratio (mol%)
= {1-(molar number of carbon-carbon double bond contained per mol of hydrogenated block copolymer (II))/(molar number of carbon-carbon double bond contained per mol of block copolymer (P))} × 100

(2-2) Also, the hydrogenation ratio of the carbon-carbon double bond in the conjugated diene-derived structural unit in the polymer block (B), and the hydrogenation ratio of the carbon-carbon double bond in the conjugated diene-derived structural unit in the polymer block (C) were calculated from the proton peak appearing in the spectrum thereof, in the same manner as above.

(3) Contact area to water (water repellency)

Water (1 mL) added with red food coloring was dripped onto a quartz plate (5 cm × 5 cm) colorless and transparent and having a flat and smooth surface, and a molded article (round flat sheet having a diameter 25 mm and a thickness 2 mm) formed of the polymer produced in Production Examples was set thereon, and a load of 2 kg was applied to the molded article using a tensile tester. The red food coloring was added to water from the viewpoint of facilitating observation, and has no influence on the water repellency.

The behavior of water in the contact area between the molded article and the quartz plate was visually observed from the side of the quartz plate, and evaluated according to the following evaluation criteria.

A: No red food coloring was seen in the contact area.
B: Some red food coloring was seen in the contact area.
C: Much red food coloring was seen in the contact area.

Regarding the ratio covered with water in the contact area between the molded article and the quartz plate (covering ratio %), the observation image taken from the side of the quartz plate was analyzed with image analyzing software (by Mitani Corporation, trade name "WinROOF ver. 5.7.2"), and the covering ratio was quantified according to the following formula.

Covering ratio %
= [(area of the red region in the contact area between the molded article and the quartz plate)/(the contact area between the molded article and the quartz plate)] × 100

[Production Example 1]

Hydrogenated block copolymer (II-1):

In a nitrogen-purged and dried pressure-resistant container, 50.0 kg of a solvent, cyclohexane, 0.1905 kg of an anionic polymerization initiator, sec-butyl lithium (10.5% by mass cyclohexane solution), and 0.40 kg of a Lewis base, tetrahydrofuran were put, heated up to 50°C. And then 6.34 kg of β-farnesene was added and polymerized for 2 hours, and subsequently 2.50 kg of styrene (1) was added and polymerized for 1 hour, and further 3.66 kg of butadiene was added and polymerized for 1 hour. Subsequently, 0.02 kg of a coupling agent, dichlorodimethylsilane was added to the polymerization reaction solution, and reacted for 1 hour to obtain a reaction solution containing poly(B-farnesene)-polystyrene-polybutadiene-polystyrene-poly(β-farnesene) penta-block copolymer (P1).

To the reaction solution, a hydrogenation catalyst, palladium-carbon (amount of palladium: 5% by mass) was added in an amount of 5% by mass relative to the block copolymer (P1), and under the condition of a hydrogen pressure of 2 MPa and 150°C, this was reacted for 10 hours. After cooling and pressure discharge, palladium-carbon was removed by filtration, then the filtrate was concentrated and further dried in vacuum to obtain a hydrogenated product (II-1) of poly(β-farnesene)-polystyrene-polybutadiene-polystyrene-poly(β-farnesene) penta-block copolymer (hereinunder this may also be referred to as "hydrogenated block copolymer (II-1)").

The physical properties of the resultant hydrogenated block copolymer (II-1) were measured. The results are shown in Table 1.

[Production Example 2]

Hydrogenated block copolymer (II-2):

In a nitrogen-purged and dried pressure-resistant container, 50.0 kg of a solvent, cyclohexane and 0.0413 kg of an anionic polymerization initiator, sec-butyl lithium (10.5% by mass cyclohexane solution) were put, heated up to 50°C. And then 1.12 kg of styrene (1) was added and polymerized for 1 hour, and subsequently 10.25 kg of β-farnesene was added and polymerized for 2 hours, and further 1.12 kg of styrene (2) was added and polymerized for 1 hour to obtain a reaction solution containing polystyrene-poly(β-farnesene)-polystyrene triblock copolymer (P2).

To the reaction solution, a hydrogenation catalyst, palladium-carbon (amount of palladium: 5% by mass) was added in an amount of 5% by mass relative to the block copolymer (P2), and under the condition of a hydrogen pressure of 2 MPa and 150°C, this was reacted for 10 hours. After cooling and pressure discharge, palladium-carbon was removed by filtration, then the filtrate was concentrated and further dried in vacuum to obtain a hydrogenated product of polystyrene-poly(B-farnesene)-polystyrene triblock copolymer (hereinunder this may also be referred to as "hydrogenated block copolymer (II-2)").

The physical properties of the resultant hydrogenated block copolymer (II-2) were measured. The results are shown in Table 1.

[Production Example 3]

Unhydrogenated block copolymer (II'-1):

In a nitrogen-purged and dried pressure-resistant container, 50.0 kg of a solvent, cyclohexane and 0.1010 kg of an anionic polymerization initiator, sec-butyl lithium (10.5% by mass cyclohexane solution) were put, heated up to 50°C. And then 1.70 kg of styrene (1) was added and polymerized for 1 hour, then 0.065 kg of a Lewis base, N,N,N',N'-tetramethylethylenediamine (TMEDA) was added and subsequently 13.30 kg of isoprene was added and polymerized for 2 hours, and further 1.70 kg of styrene (2) was added and polymerized for 1 hour to obtain a reaction solution containing styrene-isoprene-styrene triblock copolymer (P'1).

200 mL of methanol was added to the reaction solution to stop the polymerization reaction. The resultant mixture was washed with water, and then precipitated in a large amount of methanol to obtain a styrene-isoprene-styrene triblock copolymer (hereinunder this may also be referred to as "unhydrogenated block copolymer (II'-1)).

The physical properties of the unhydrogenated block copolymer (II'-1) were measured. The results are shown in Table 1.

Table 1

| | | Production Example 1 | Production Example 2 | Production Example 3 |
|---|---|---|---|---|
| | | II -1 | II-2 | II'- 1 |
| | Cyclohexane | 50.0 | 50.0 | 50.0 |

(continued)

| | | Production Example 1 | Production Example 2 | Production Example 3 |
|---|---|---|---|---|
| | | II -1 | II-2 | II'- 1 |
| Amount Used (kg) | Sec-Butyl Lithium (10.5% by mass cyclohexane solution) | 0.1905 | 0.0413 | 0.1010 |
| | Tetrahydrofuran | 0.40 | - | - |
| | TMEDA | - | - | 0.065 |
| | Polymer Block (A) Styrene (1) | 2.50 | 1.12 | 1.70 |
| | Styrene (2) | - | 1.12 | 1.70 |
| | Polymer Block (B) β-Farnesene | 6.34 | 10.25 | - |
| | Polymer Block (C) Butadiene | 3.66 | - | - |
| | Isoprene | - | - | 13.30 |
| | Dichlorodimethylsilane | 0.02 | - | - |
| | Dichlorosilane | - | - | - |
| (A)/(B) [ratio by mass]*1 | | 28/72 | 18/82 | - |
| (A)/((B)+(C)) [ratio by mass]*2 | | 20/80 | 18/82 | 20/80 |
| (b1)/(B) [% by mass*3 | | 100 | 100 | - |
| ((b1)+(c1))/((B)+(C)) [% by mass]*4 | | 63.4 | - | - |
| Content [% by mass] of polymer block (A) in block copolymer (II) | | 20 | 17.9 | 20 |
| Polymer Framework*5 | | F-St-Bd-St-F | St-F-St | St-Ip-St |
| Physical Properties | Peak Top Molecular Weight (Mp) of styrene block | 8,000 | 16,600 | 10,000 |
| | Peak Top Molecular Weight (Mp) of polymer | 102,000 | 201,000 | 120,000 |
| | Molecular Weight Distribution (Mw/Mn) | 1.5 | 1.23 | 1.12 |
| | Hydrogenation Ratio (mol%) of (II)*6 | 93.0 | 93.2 | - |
| | Hydrogenation Ratio (mol%) of polymer block (B)*7 | 90.0 | 93.2 | - |
| | Hydrogenation Ratio (mol%) of polymer block (C)*8 | 99.0 | - | - |
| | Contact Area to water (covering ratio%) | A (0%) | A (5.4%) | C (38.3%) |

Expressions in Table 1 are as follows.

*1: (A)/(B) means a ratio by mass of the content of the polymer block (A) to the content of the polymer block (B).
*2: (A)/((B)+(C)) means a ratio by mass of the content of the polymer block (A) to the total content of the polymer block (B) and the polymer block (C).
*3: (b1)/(B) means a content (% by mass) of the farnesene-derived structural unit (b1) in the polymer block (B).
*4: :((b1)+(c1))/((B)+(C)) means a total content (% by mass) of the structural unit (b1) and the structural unit (c1) relative to the total amount of the polymer block (B) and the polymer block (C).
*5: F-St-Bd-St-F means a poly(B-farnesene)-polystyrene-polybutadiene-polystyrene-poly(β-farnesene) penta-block copolymer.

St-F-St means a polystyrene-poly(B-farnesene)-polystyrene triblock copolymer.
St-Ip-St means a polystyrene-polyisoprene-polystyrene triblock copolymer.

*6: The hydrogenation ratio of (II) shows a hydrogenation ratio of the carbon-carbon double bond in the conjugated diene-derived structural unit in the block copolymer (P).
*7: The hydrogenation ratio of the polymer block (B) shows a hydrogenation ratio of the carbon-carbon double bond in the conjugated diene-derived structural unit in the polymer block (B). However, this applies to only the case having the polymer block (B).
*8: The hydrogenation ratio of the polymer block (C) shows a hydrogenation ratio of the carbon-carbon double bond in the conjugated diene-derived structural unit in the polymer block (C). However, this applies to only the case having the polymer block (C).

[Examples 1 to 9] [Comparative Examples 1 to 5]

(1) Melt-Kneading (production of resin composition)

According to the blending ratio (part by mass) described in Table 3, the components except the crosslinking agent (III) and the crosslinking accelerator were put into a mixing roll (14-inch roll, by Kansai Roll Co., Ltd.) and melt-kneaded therein under the condition shown in Table 2 (steps 1 and 2). Subsequently, the melt-kneaded product was taken out from the open roll (step 3).
Next, the melt-kneaded product was put into a mixing roll (step 4), and the crosslinking agent (III) and the crosslinking accelerator were put thereinto (step 5), and again kneaded, and then taken out (step 6) to obtain a resin composition. (2) Molding (production of molded article)
The resin composition obtained in the above was compression-molded (160°C, 7 to 40 minutes) and crosslinked to obtain a rubber sheet (thickness 0.5 mm).
The physical properties of the resultant resin composition or rubber sheet were evaluated according to the following evaluation methods. The results are shown in Table 3.

Table 2

| | | Temperature (°C) | Time (min) |
|---|---|---|---|
| Step 1 | Rubber (I) | 16 - 31 | 4 - 7 |
| Step 2 | Block copolymer (II) + zinc oxide + stearic acid + silica + silane coupling agent were fed. | 50 - 70 | 10 - 30 |
| Step 3 | Taken out. | | |
| Step 4 | The melt-kneaded product was fed, and again kneaded. | 40 - 70 | 1 - 2 |
| Step 5 | Crosslinking agent (III) + vulcanization accelerator were fed, and again kneaded. | 40 - 70 | 4 - 8 |
| Step 6 | Taken out. | | |

[Evaluation Methods]

(Static Friction Coefficient)

(1) Dry condition

According to ASTM D-1894, the static friction coefficient of the surface of the rubber sheet of the resin composition obtained in Examples and Comparative Examples was measured.
From the rubber sheet, a test sample having a length of 110 mm, a width of 63.5 mm and a thickness of 0.5 mm was cut out, and wound around a cell (weight 200 g, 63.5 mm × 63.5 mm), and fixed to the autograph head so that the test piece bed of the friction coefficient measuring device could be horizontal. The material of the friction element was aluminum, and the static friction coefficient was measured at a tensile speed of 150 mm/min. A sample having a larger static friction coefficient value has a larger friction force and is not slippery and excellent in dry grip performance.

(2) Wet condition

The static friction coefficient was measured in the same manner as in the above (1) dry condition, except that 1 cc of distilled water was dripped onto the friction element. A sample having a larger static friction coefficient value has a larger friction force and is not slippery and excellent in wet grip performance.

(Wear Resistance)

Using a DIN abrasion test according to JIS K 6264-2:2005, the DIN abrasion volume was measured. A sample having a smaller value is excellent in wear resistance.

(Vulcanization Speed)

For measurement of vulcanization speed (Tc90), an oscillating vulcanization tester (Curastometer) was used according to JIS K 6300-2. The torque at 160°C of the resin composition obtained in Examples and Comparative Examples was measured, and the vulcanization time to reach 90% vulcanization amount was referred to as the vulcanization speed (Tc90). A sample having a smaller value is excellent in vulcanization speed.

(Specific Gravity)

The specific gravity was measured according to ISO 1183:1987. In all Examples and Comparative Examples, the specific gravity was 1.1 g/$cm^3$.

(Hardness)

Using a punching blade according to JIS K 6251:2010, a dumbbell No. 3 test piece (thickness 0.5 mm) was punched out from the rubber sheet of the resin composition obtained in Examples and Comparative Examples.

12 sheets of the resulting test piece were layered to have a thickness of 6 mm, and the hardness was measured according to JIS K 6253-3:2012, using the indenter of a type A durometer. A sample having a smaller hardness value is excellent in flexibility.

(Tensile Strength at break and Tensile Elongation at break)

Using the dumbbell No. 3 test piece (0.5 mm) prepared according to the same method as that for the above-mentioned (hardness) measurement, and according to JIS K 6251:2010, the tensile strength at break and the tensile elongation at break were measured. A sample having a larger tensile strength at break value and a larger tensile elongation at break value is excellent in tensile characteristics.

(Tear Strength)

According to JIS K 6252-1:2015, and using a punching blade, a notchless angle-type test piece (thickness 0.5 mm) was punched out from the rubber sheet of the resin composition obtained in Examples and Comparative Examples. The tear strength of the resultant test piece was measured at a tensile speed of 500 mm/min and at a temperature of 23°C. A sample having a larger value is excellent in tear strength.

Table 3

| | | | Comparative Example 1 | Example 1 | Example 2 | Example 3 | Example 4 | Comparative Example 2 | Comparative Example 3 | Example 5 | Example 6 | Comparative Example 4 | Example 7 | Example 8 | Comparative Example 5 | Example 9 |
|---|---|---|---|---|---|---|---|---|---|---|---|---|---|---|---|---|
| Composition (part by mass) | Rubber (I) | SBR | 100 | 90 | 90 | 90 | 80 | 50 | 100 | 90 | 90 | 90 | 80 | 80 | 100 | 90 |
| | Block Copolymer (I1-1) | | | 10 | 10 | 10 | 20 | 50 | | 10 | | | 20 | | | 10 |
| | Block Copolymer (II-2) | | | | | | | | | | 10 | | | 20 | | |
| | Block Copolymer (II'-1) | | | | | | | | | | | 10 | | | | |
| | Zinc Oxide | | 3 | 3 | 3 | 3 | 3 | 3 | 3 | 3 | 3 | 3 | 3 | 3 | 3 | 3 |
| | Stearic Acid | | 1 | 1 | 1 | 1 | 1 | 1 | 1 | 1 | 1 | 1 | 1 | 1 | 1 | 1 |
| | Silica (1) | 7000GR | 35 | 35 | 35 | 35 | 35 | 35 | | | | | | | 17.5 | 17.5 |
| | Silica (2) | VN3 | | | | | | | 35 | 35 | 35 | 35 | 35 | 35 | | |
| | Silica (3) | ER | | | | | | | | | | | | | 17.5 | 17.5 |
| | Silane Coupling Agent (1) | Si75 | 3 | 3 | | | 3 | 3 | | | | | | | | |
| | Silane Coupling Agent (2) | Si69 | | | 3 | | | | | | | | | | | |
| | Silane Coupling Agent (3) | A189 | | | | 3 | | | 3 | 3 | 3 | 3 | 3 | 3 | 3 | 3 |
| | Crosslinking Agent (III) | | 1.8 | 1.8 | 1.8 | 1.8 | 1.8 | 1.8 | 1.8 | 1.8 | 1.8 | 1.8 | 1.8 | 1.8 | 1.8 | 1.8 |
| | Crosslinking Accelerator (1) | CZ | 1.1 | 1.1 | 1.1 | 1.1 | 1.1 | 1.1 | 1.1 | 1.1 | 1.1 | 1.1 | 1.1 | 1.1 | 1.1 | 1.1 |
| | Crosslinking Accelerator (2) | TT | 0.4 | 0.4 | 0.4 | 0.4 | 0.4 | 0.4 | 0.4 | 0.4 | 0.4 | 0.4 | 0.4 | 0.4 | 0.4 | 0.4 |
| Static Friction Coefficient | | dry condition | 4.7 | 6.8 | 7.0 | 6.4 | 6.4 | 6.2 | 3.9 | 5.4 | 7.3 | 4.1 | 5.9 | 8.0 | 4.6 | 5.2 |
| | | wet condition | 1.8 | 3.3 | 3.0 | 3.4 | 2.9 | 3.0 | 1.3 | 2.3 | 4.5 | 1.6 | 3.0 | 4.6 | 1.6 | 2.4 |

(continued)

| | | Comparative Example 1 | Example 1 | Example 2 | Example 3 | Example 4 | Comparative Example 2 | Comparative Example 3 | Example 5 | Example 6 | Comparative Example 4 | Example 7 | Example 8 | Comparative Example 5 | Example 9 |
|---|---|---|---|---|---|---|---|---|---|---|---|---|---|---|---|
| Wear Resistance (DIN abrasion volume) | $mm^3$ | 124 | 155 | 183 | 111 | 164 | 220 | 89 | 113 | 123 | 116 | 116 | 145 | 92 | 117 |
| Vulcanization Speed (Tc (90) at 160°C) | min | 12 | 11 | 11 | 4.7 | 11 | 7.9 | 5.1 | 4.9 | 3.8 | 4.3 | 3.5 | 4.1 | 4.0 | 3.5 |
| Hardness | Type A | 62 | 64 | 65 | 64 | 65 | 69 | 63 | 64 | 63 | 63 | 64 | 63 | 64 | 66 |
| Tensile Strength at break | MPa | 25 | 24 | 24 | 15 | 24 | 12 | 14 | 14 | 14 | 19 | 15 | 15 | 15 | 14 |
| Tensile Elongation at break | % | 850 | 830 | 710 | 380 | 750 | 500 | 450 | 460 | 410 | 490 | 400 | 430 | 360 | 390 |
| Tear Strength | kN/m | 57 | 54 | 52 | 65 | 56 | 52 | 63 | 83 | 75 | 70 | 69 | 74 | 73 | 78 |

From comparison between Examples 1 to 4 and Comparative Example 1, between Examples 5 and 6 and Comparative Examples 3 and 4, and between Example 9 and Comparative Example 5, it is known that, when the resin composition contains the block copolymer (II), the static friction coefficient becomes large to better non-slippiness both under the dry condition and the wet condition.
From comparison between Examples 1 and 4 and Comparative Example 2, it is known that when the mass ratio of the rubber (I) to the block copolymer (II) is defined to fall within a specific numerical range, wear resistance is excellent while non-slippiness is maintained.
Further, from all Examples shown in Table 3, it is known that the resin composition of the present embodiment gives a molded article non-slippery and excellent in wear resistance and additionally excellent in the balance of tear strength and tensile characteristics.

[Examples 10 to 13] [Comparative Examples 6, 7]

According to the blending ratio (part by mass) described in Table 4 and in the same manner as in Example 1, resin compositions and rubber sheets were produced and the physical properties thereof were evaluated.
The rubber (I) and the crosslinking accelerators (3) to (5) in Table 4 are as mentioned below, and the other materials are as described above.

<Rubber (I)>

Rubber (I): BR, trade name BR-01, by JSR Corporation, polybutadiene rubber (BR), weight-average molecular weight (Mw) = 550,000, cis-form content = 95% by mass, vinyl content = 2.5% by mass.

<Crosslinking Accelerator>

Crosslinking accelerator (3): trade name Nocceler DM, by Ouchi Shinko Chemical Industrial Co., Ltd., di-2-benzothiazolyl disulfide.
Crosslinking accelerator (4): trade name Nocceler TBT, by Ouchi Shinko Chemical Industrial Co., Ltd., tetrabutylthiuram disulfide.
Crosslinking accelerator (5): salicylic acid.

Table 4

| | | Comparative Example 6 | Example 10 | Example 11 | Example 12 | Example 13 | Comparative Example 7 |
|---|---|---|---|---|---|---|---|
| Composition (part by mass) | Rubber (I) BR | 100 | 90 | 80 | 90 | 80 | 40 |
| | Block Copolymer (II-1) | | 10 | 20 | | | 60 |
| | Block Copolymer (II-2) | | | | 10 | 20 | |
| | Zinc Oxide | 3 | 3 | 3 | 3 | 3 | 3 |
| | Stearic Acid | 1 | 1 | 1 | 1 | 1 | 1 |
| | Silica (1) 7000GR | 35 | 35 | 35 | 35 | 35 | 35 |
| | Silane Coupling Agent (3) A189 | 3 | 3 | 3 | 3 | 3 | 3 |
| | Crosslinking Agent (III) | 1.8 | 1.8 | 1.8 | 1.8 | 1.8 | 1.8 |
| | Crosslinking Accelerator (1) CZ | 1.1 | 1.1 | 1.1 | 1.1 | 1.1 | 1.1 |

(continued)

| | | | Comparative Example 6 | Example 10 | Example 11 | Example 12 | Example 13 | Comparative Example 7 |
|---|---|---|---|---|---|---|---|---|
| | Crosslinking Accelerator (3) | DM | 1.5 | 1.5 | 1.5 | 1.5 | 1.5 | 1.5 |
| | Crosslinking Accelerator (4) | TBT | 0.6 | 0.6 | 0.6 | 0.6 | 0.6 | 0.6 |
| | Crosslinking Accelerator (5) | salicylic acid | 1 | 1 | 1 | 1 | 1 | 1 |
| Static Friction Coefficient | | dry condition | 2.0 | 2.5 | 2.4 | 2.8 | 3.3 | 3.2 |
| | | wet condition | 1.1 | 1.5 | 1.2 | 1.4 | 1.6 | 1.5 |
| Wear Resistance (DIN abrasion volume) | | $mm^3$ | 18 | 29 | 43 | 30 | 43 | 210 |
| Vulcanization Speed (Tc (90) at 160°C) | | min | 8.60 | 8.51 | 8.95 | 8.71 | 8.71 | 8.65 |
| Hardness | | Type A | 66 | 67 | 70 | 68 | 68 | 77 |
| Tensile Strength at break | | MPa | 9.4 | 10 | 9.4 | 9.5 | 9.8 | 13 |
| Tensile Elongation at break | | % | 230 | 230 | 210 | 210 | 230 | 300 |
| Tear Strength | | kN/m | 73 | 69 | 52 | 60 | 51 | 46 |

From comparison between Examples 10 to 13 and Comparative Example 6, it is known that, when the resin composition contains the block copolymer (II), the static friction coefficient becomes large to better non-slippiness both under the dry condition and the wet condition.

From comparison between Examples 10 and 11 and Comparative Example 7, it is known that when the mass ratio of the rubber (I) to the block copolymer (II) is defined to fall within a specific numerical range, wear resistance is excellent while non-slippiness is maintained.

Further, from all Examples shown in Table 4, it is known that the resin composition of the present embodiment gives a molded article non-slippery, and excellent in wear resistance and additionally excellent in the balance of tear strength and tensile characteristics.

[Example 14] [Comparative Examples 8, 9]

According to the blending ratio (part by mass) described in Table 5 and in the same manner as in Example 1, resin compositions and rubber sheets were produced and the physical properties thereof were evaluated.

The rubber (I) in Table 5 is as mentioned below, and the other materials are as described above.

<Rubber (I)>

Rubber (I): NR, a natural rubber, made in Indonesia, RSS No. 1.

Table 5

| | | | Comparative Example 8 | Example 14 | Comparative Example 9 |
|---|---|---|---|---|---|
| | Rubber (I) | NR | 100 | 90 | 50 |

(continued)

| | | | Comparative Example 8 | Example 14 | Comparative Example 9 |
|---|---|---|---|---|---|
| Composition (part by mass) | Block Copolymer (II-1) | | | 10 | 50 |
| | Zinc Oxide | | 3 | 3 | 3 |
| | Stearic Acid | | 1 | 1 | 1 |
| | Silica (1) | 7000GR | 35 | 35 | 35 |
| | Silane Coupling Agent (3) | A189 | 3 | 3 | 3 |
| | Crosslinking Agent (III) | | 1.8 | 1.8 | 1.8 |
| | Crosslinking Accelerator (1) | CZ | 1.1 | 1.1 | 1.1 |
| | Crosslinking Accelerator (3) | DM | 1.5 | 1.5 | 1.5 |
| | Crosslinking Accelerator (4) | TBT | 0.6 | 0.6 | 0.6 |
| | Crosslinking Accelerator (5) | salicylic acid | 1 | 1 | 1 |
| Static Friction Coefficient | | dry condition | 3.8 | 4.3 | 4.2 |
| | | wet condition | 2.4 | 2.6 | 1.5 |
| Wear Resistance (DIN abrasion volume) | | $mm^3$ | 132 | 143 | 216 |
| Vulcanization Speed (Tc (90) at 160°C) | | min | 3.15 | 4.13 | 2.58 |
| Hardness | | Type A | 66 | 67 | 72 |
| Tensile Strength at break | | MPa | 21 | 18 | 5.3 |
| Tensile Elongation at break | | % | 450 | 420 | 150 |
| Tear Strength | | kN/m | 60 | 56 | 43 |

From comparison between Example 14 and Comparative Example 8, it is known that, when the resin composition contains the block copolymer (II), the static friction coefficient becomes large to better non-slippiness both under the dry condition and the wet condition.

From comparison between Example 14 and Comparative Example 9, it is known that when the mass ratio of the rubber (I) to the block copolymer (II) is defined to fall within a specific numerical range, wear resistance is excellent while non-slippiness is maintained.

Further, from Example 14, it is known that the resin composition of the present embodiment gives a molded article non-slippery, and excellent in wear resistance and additionally excellent in the balance of tear strength and tensile characteristics.

[Examples 15 to 20] [Comparative Example 10]

According to the blending ratio (part by mass) described in Table 6 and in the same manner as in Example 1, resin compositions and rubber sheets were produced and the physical properties thereof were evaluated.

The materials in Table 6 are as described above.

Table 6

| | | | Comparative Example 10 | Example 15 | Example 16 | Example 17 | Example 18 | Example 19 | Example 20 |
|---|---|---|---|---|---|---|---|---|---|
| Composition (part by mass) | Rubber (I) | SBR | 70 | 63 | 63 | 56 | 56 | 70 | 70 |
| | | NR | 20 | 18 | 18 | 16 | 16 | 10 | 10 |
| | | BR | 10 | 9 | 9 | 8 | 8 | 10 | 10 |
| | Block Copolymer (II-1) | | | 10 | | 20 | | 10 | |
| | Block Copolymer (II-2) | | | | 10 | | 20 | | 10 |
| | Zinc Oxide | | 3 | 3 | 3 | 3 | 3 | 3 | 3 |
| | Stearic Acid | | 1 | 1 | 1 | 1 | 1 | 1 | 1 |
| | Silica (1) | 7000GR | 35 | 35 | 35 | 35 | 35 | 35 | 35 |
| | Silane Coupling Agent (2) | Si69 | 3 | 3 | 3 | 3 | 3 | 3 | 3 |
| | Crosslinking Agent (III) | | 1.8 | 1.8 | 1.8 | 1.8 | 1.8 | 1.8 | 1.8 |
| | Crosslinking Accelerator (1) | CZ | 1 | 1 | 1 | 1 | 1 | 1 | 1 |
| | Crosslinking Accelerator (2) | TT | 0.6 | 0.6 | 0.6 | 0.6 | 0.6 | 0.6 | 0.6 |
| Static Friction Coefficient | | dry condition | 2.6 | 3.7 | 3.3 | 4.3 | 3.2 | 4.3 | 4.0 |
| | | wet condition | 1.6 | 2.4 | 2.4 | 2.7 | 2.3 | 2.9 | 2.5 |
| Wear Resistance (DIN abrasion volume) | | $mm^3$ | 104 | 120 | 127 | 132 | 150 | 110 | 113 |
| Vulcanization Speed (Tc (90) at 160°C) | | min | 6.4 | 5.7 | 6.5 | 6.3 | 8.3 | 6.5 | 6.0 |
| Hardness | | Type A | 61 | 63 | 62 | 67 | 70 | 63 | 63 |
| Tensile Strength at break | | MPa | 21 | 16 | 17 | 15 | 14 | 18 | 17 |
| Tensile Elongation at break | | % | 590 | 430 | 440 | 460 | 430 | 520 | 440 |
| Tear Strength | | kN/m | 64 | 66 | 62 | 56 | 53 | 64 | 61 |

From comparison between Examples 15 to 20 and Comparative Example 10, it is known that, even when the resin composition contains plural kinds of rubbers (I) but when it contains the block copolymer (II), the static friction coefficient becomes large to better non-slippiness both under the dry condition and the wet condition.
Further, from all Examples shown in Table 6, it is known that the resin composition of the present embodiment gives a molded article non-slippery, and excellent in wear resistance and additionally excellent in the balance of tear strength and tensile characteristics.

[Examples 21 to 33] [Comparative Examples 11, 12]

According to the blending ratio (part by mass) described in Tables 8 and 9 and in the same manner as in Example 1, resin compositions and rubber sheets were produced and the physical properties thereof were evaluated.
The softeners in Tables 8 and 9 are the softeners produced in Production Examples 4 to 8 given below. The filler (cellulose fibers) in Table 9 is as mentioned hereinunder, and the other materials are as described above.

<Softener>

[Production Example 4]

Poly-β-farnesene (IV-1):

In a nitrogen-purged and dried pressure-resistant container, 40 kg of a solvent, hexane, and 0.55 kg of an initiator, n-butyl lithium (17% by mass hexane solution) were put, heated up to 50°C, and 40 kg of B-farnesene was added and polymerized for 1 hour. The resultant polymerization reaction solution was treated with methanol, and washed with water. After washed, the polymerization reaction solution was separated from water and dried at 70°C for 12 hours to obtain poly-B-farnesene (IV-1) having the physical properties shown in Table 7.
The number-average molecular weight (Mn) and the molecular weight distribution (Mw/Mn) were measured in the same manner as in the above [Measurement Methods].

[Production Example 5]

Poly-β-farnesene (IV-2):

In a nitrogen-purged and dried pressure-resistant container, 40 kg of a solvent, hexane, and 1.84 kg of an initiator, n-butyl lithium (17% by mass hexane solution) were put, heated up to 50°C, and 40 kg of B-farnesene was added and polymerized for 1 hour. The resultant polymerization reaction solution was treated with methanol, and washed with water. After washed, the polymerization reaction solution was separated from water and dried at 70°C for 12 hours to obtain poly-6-farnesene (IV-2) having the physical properties shown in Table 7.
The number-average molecular weight (Mn) and the molecular weight distribution (Mw/Mn) were measured in the same manner as in the above [Measurement Methods].

[Production Example 6]

Butadiene-β-farnesene copolymer (IV-3):

In a nitrogen-purged and dried pressure-resistant container, 40 kg of a solvent, hexane, and 0.72 kg of an initiator, n-butyl lithium (17% by mass hexane solution) were put, heated up to 50°C, and a mixed solution of 24.0 kg of β-farnesene and 16.0 kg of butadiene that had been prepared previously was added and polymerized for 1 hour. The resultant polymerization reaction solution was treated with methanol, and washed with water. After washed, the polymerization reaction solution was separated from water and dried at 70°C for 12 hours to obtain butadiene-β-farnesene copolymer (IV-3) having the physical properties shown in Table 7.
The number-average molecular weight (Mn) and the molecular weight distribution (Mw/Mn) were measured in the same manner as in the above [Measurement Methods].

[Production Example 7]

Hydrogenated polyisoprene (IV-4):

In a nitrogen-purged and dried pressure-resistant container, 40 kg of a solvent, hexane, and 0.77 kg of an initiator,

n-butyl lithium (17% by mass hexane solution) were put, heated up to 50°C, and 40 kg of isoprene was added and polymerized for 1 hour. The resultant polymerization reaction solution was treated with methanol, and washed with water. After washed, the polymerization reaction solution was separated from water and dried at 70°C for 12 hours to obtain polyisoprene.

40 kg of the polyisoprene was mixed with 50 kg of a solvent, cyclohexane in an autoclave, and heated up to 50°C. Subsequently, a mixture prepared by mixing triisobutyl aluminum and nickel 2-ethylhexanoate in a molar ratio of 3/1, as a hydrogenation catalyst, was added in an amount of $1.5 \times 10^{-3}$ times by mol as the nickel metal constituting the hydrogenation catalyst, relative to the molar number of all the unsaturated bonds in the polyisoprene, and then heated up to 80°C. While hydrogen was supplied as needed so as to keep the hydrogen pressure 1.0 MPa, this was kept stirred and reacted for 10 hours. After cooling and pressure discharge, triisobutyl aluminum and nickel 2-ethylhexanoate were removed by filtration, and the filtrate was concentrated and dried in vacuum to obtain a hydrogenated polyisoprene (IV-4) having the physical properties shown in Table 7.

The number-average molecular weight (Mn), the molecular weight distribution (Mw/Mn) and the hydrogenation ratio (mol%) were measured in the same manner as in the above [Measurement Methods].

[Production Example 8]

Modified liquid polyisoprene (IV-5):

In a nitrogen-purged and dried pressure-resistant container, 40 kg of hexane, and 0.90 kg of n-butyl lithium (17% by mass hexane solution) were put, heated up to 70°C, and then 41 kg of isoprene was added and polymerized for 1 hour. The resultant polymerization reaction solution was treated with methanol, and washed with water. Water was separated, and the polymerization reaction solution was dried in vacuum at 70°C for 12 hours to obtain unmodified polyisoprene (IV-5). Subsequently, 30 kg of the unmodified polyisoprene (IV-5) and 0.45 kg of maleic anhydride were put into a reactor and reacted at 160°C for 20 hours to obtain a maleic anhydride-modified liquid polyisoprene (IV-5) having the physical properties shown in Table 7.

The number-average molecular weight (Mn) and the molecular weight distribution (Mw/Mn) were measured in the same manner as in the above [Measurement Methods].

The reaction rate of the modifying agent was 99%, and the functional group added to the modified liquid polyisoprene (IV-5) was 1.5 parts by mass relative to 100 parts by mass of the unmodified polymer.

<Cellulose Fibers>

Cellulose fibers: trade name ARBOCEL-BWW40, by Rettenmaier Japan Co., Ltd., fiber length 200 μm, fiber diameter 20 μm, fiber density 110 to 145.

Table 7

| | | Production Example 4 | Production Example 5 | Production Example 6 | Production Example 7 | Production Example 8 |
|---|---|---|---|---|---|---|
| | | IV-1 | IV-2 | IV-3 | IV-4 | IV-5 |
| Amount Used (kg) | Hexane | 40.0 | 40.0 | 40.0 | 40.0 | 40.0 |
| | N-butyl lithium (17% by mass hexane solution) | 0.55 | 1.84 | 0.72 | 0.77 | 0.90 |
| | B-farnesene | 40.0 | 40.0 | 24.0 | - | - |
| | Butadiene | - | - | 16.0 | - | - |
| | Isoprene | - | - | - | 40.0 | 41.0 |

(continued)

| | | Production Example 4 | Production Example 5 | Production Example 6 | Production Example 7 | Production Example 8 |
|---|---|---|---|---|---|---|
| | | IV-1 | IV-2 | IV-3 | IV-4 | IV-5 |
| Physical Properties | Number-Average Molecular Weight (Mn) | 27,300 | 8,180 | 21,000 | 19,600 | 33,700 |
| | Molecular Weight Distribution (Mw/Mn) | 1.10 | 1.10 | 1.03 | 1.20 | 1.12 |
| | Hydrogenation Ratio (mol%) | - | - | - | 90.0 | - |
| | Degree of Modification (part by mass) | - | - | - | - | 1.50 |

Table 8

| | | | Comparative Example 11 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Composition (part by mass) | Rubber (I) | SBR | 20 | 18 | 18 | 18 | 18 | 18 | 18 | 18 | 18 | 18 | 18 |
| | | NR | 70 | 63 | 63 | 63 | 63 | 63 | 63 | 63 | 63 | 63 | 63 |
| | | BR | 10 | 9 | 9 | 9 | 9 | 9 | 9 | 9 | 9 | 9 | 9 |
| | Block Copolymer (II-1) | | | 10 | 5 | 5 | 5 | 5 | | | | 8 | 8 |
| | Block Copolymer (II-2) | | | | | | | | 5 | 5 | 5 | | |
| | Softener | Poly-β-farnesene (IV-1) | | | 5 | | | | 5 | | | | |
| | | Poly-β-farnesene (IV-2) | | | | 5 | | | | 5 | | 2 | |
| | | Butadiene-β-farnesene copolymer (IV-3) | | | | | 5 | | | | | | 2 |
| | | Hydrogenated polyisoprene (IV-4) | | | | | | 5 | | | 5 | | |
| | Zinc Oxide | | 3 | 3 | 3 | 3 | 3 | 3 | 3 | 3 | 3 | 3 | 3 |
| | Stearic Acid | | 1 | 1 | 1 | 1 | 1 | 1 | 1 | 1 | 1 | 1 | 1 |
| | Silica (1) | 7000GR | 35 | 35 | 35 | 35 | 35 | 35 | 35 | 35 | 35 | 35 | 35 |
| | Silane Coupling Agent (2) | Si69 | 3 | 3 | 3 | 3 | 3 | 3 | 3 | 3 | 3 | 3 | 3 |
| | Crosslinking Agent (III) | | 1.8 | 1.8 | 1.8 | 1.8 | 1.8 | 1.8 | 1.8 | 1.8 | 1.8 | 1.8 | 1.8 |
| | Crosslinking Accelerator (1) | CZ | 0.35 | 0.35 | 0.35 | 0.35 | 0.35 | 0.35 | 0.35 | 0.35 | 0.35 | 0.35 | 0.35 |
| | Crosslinking Accelerator (2) | TT | 1.6 | 1.6 | 1.6 | 1.6 | 1.6 | 1.6 | 1.6 | 1.6 | 1.6 | 1.6 | 1.6 |

(continued)

| | | Comparative Example 11 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|
| Static Friction Coefficient | dry condition | 3.2 | 3.7 | 4.4 | 3.5 | 3.5 | 3.4 | 3.3 | 5.0 | 4.5 | 4.1 | 4.5 |
| | wet condition | 1.6 | 1.7 | 3.0 | 2.3 | 2.3 | 2.3 | 2.2 | 3.2 | 2.2 | 2.6 | 2.5 |
| Wear Resistance (DIN abrasion volume) | $mm^3$ | 91 | 114 | 121 | 126 | 127 | 124 | 117 | 160 | 124 | 130 | 132 |
| Vulcanization Speed (Tc (90) at 160°C) | min | 1.6 | 10 | 1.6 | 1.6 | 1.6 | 4.1 | 1.5 | 1.5 | 8.0 | 2.1 | 1.8 |
| Hardness | Type A | 71 | 69 | 65 | 68 | 65 | 70 | 65 | 64 | 68 | 67 | 67 |
| Tensile Strength at break | MPa | 13 | 12 | 13 | 11 | 10 | 12 | 8.9 | 14 | 11 | 12 | 11 |
| Tensile Elongation at break | % | 330 | 300 | 330 | 340 | 290 | 320 | 280 | 400 | 320 | 310 | 320 |
| Tear Strength | kN/m | 70 | 66 | 62 | 60 | 57 | 51 | 56 | 59 | 50 | 61 | 66 |

Comparing Comparative Example 11 and Example 21, the static friction coefficient became large in the dry condition. In Examples 22 to 30, a softener was added, and in these, the static friction coefficient became large even in the wet condition in addition to the dry condition. Though not clear, the reason is presumed that, when the content of NR is large, the viscosity difference between the plural kinds of the rubber (I) and the block copolymer (II) became large, but by adding the softener, the viscosity of the rubber component lowered and therefore the viscosity difference became small to improve the dispersibility.

Further, from all Examples shown in Table 8, it is known that the resin composition of the present embodiment gives a molded article non-slippery and excellent in wear resistance and additionally excellent in the balance of tear strength and tensile characteristics.

Table 9

| | | | Comparative Example 12 | Example 31 | Example 32 | Example 33 |
|---|---|---|---|---|---|---|
| Composition (part by mass) | Rubber (I) | NR | 95 | 90 | 90 | 90 |
| | Block Copolymer (II-1) | | | 5 | 5 | 5 |
| | Softener | Butadiene-β-farnesene copolymer (IV-3) | 5 | 5 | 5 | 4 |
| | | Modified liquid polyisoprene (IV-5) | | | | 1 |
| | Zinc Oxide | | 3 | 3 | 3 | 3 |
| | Stearic Acid | | 1 | 1 | 1 | 1 |
| | Silica (1) | 7000GR | 35 | 35 | 25 | 25 |
| | Cellulose Fibers | ARBOCEL-BWW40 | | | 10 | 10 |
| | Silane Coupling Agent (2) | Si69 | 3 | 3 | 3 | 3 |
| | Crosslinking Agent (III) | | 1.8 | 1.8 | 1.8 | 1.8 |
| | Crosslinking Accelerator | CZ | 0.35 | 0.35 | 0.35 | 0.35 |
| | Crosslinking Accelerator (2) | TT | 0.16 | 0.16 | 0.16 | 0.16 |
| Static Friction Coefficient | | dry condition | 3.2 | 3.4 | 3.8 | 3.8 |
| | | wet condition | 1.9 | 2.2 | 2.4 | 2.5 |
| Wear Resistance (DIN abrasion volume) | | $mm^3$ | 132 | 129 | 169 | 158 |
| Vulcanization Speed (Tc (90) at 160°C) | | min | 3.8 | 3.7 | 4.1 | 4.2 |
| Hardness | | Type A | 65 | 65 | 63 | 63 |

Comparing Comparative Example 12 and Example 31, Example 31 containing the block copolymer (II-1) is more excellent in the static friction coefficient. In Example 32 where a part of silica (1) in Example 31 was replaced with cellulose fibers, the grip performance bettered more. In Example 33 where a part of the softener in Example 32 was replaced with the modified liquid polyisoprene (IV-5), the DIN abrasion volume value decreased while the static friction coefficient in Example 32 was maintained.

Industrial Applicability

The resin composition of the present invention can form a molded article which is non-slippery and excellent in

wear resistance, and is further expected to be excellent in the balance of tear strength and tensile characteristics. Therefore, the resin composition of the present invention can be favorably used for soles for footwear; sports goods; various grips for writing materials, tools and electric tools; parts of home electric appliances such as refrigerators; automobile parts such as side moldings; tread members for tires; business machines such as winding rollers; members for use for furniture such as sofas; rubber members such as rubber foot covers; building materials such as coated plywoods and coated steel plates; and industrial members such as industrial belts.

## Claims

**1.** A resin composition containing a rubber (I), a block copolymer (II) and a crosslinking agent (III), wherein the ratio by mass of the rubber (I) to the block copolymer (II), (I)/(II) is 99/1 to 55/45,

the block copolymer (II) is a block copolymer containing a polymer block (A) that contains an aromatic vinyl compound-derived structural unit and a polymer block (B) that contains a farnesene-derived structural unit (b1),
the crosslinking agent (III) is sulfur and/or a sulfur-containing compound, and
the content of the crosslinking agent (III) is 0.5 to 6.0 parts by mass relative to 100 parts by mass of the total content of the rubber (I) and the block copolymer (II).

**2.** The resin composition according to claim 1, wherein the ratio by mass of the rubber (I) to the block copolymer (II), (I)/(II) is 99/1 to 70/30.

**3.** The resin composition according to claim 1 or 2, wherein the block copolymer (II) further contains a polymer block (C) that contains a structural unit (c2) derived from a conjugated diene except farnesene.

**4.** The resin composition according to claim 3, wherein the block copolymer (II) contains at least two polymer blocks (A), at least one polymer block (B) and at least one polymer block (C), and has at least one polymer block (B) at the terminal thereof.

**5.** The resin composition according to any of claims 1 to 4, wherein the block copolymer (II) is a hydrogenated block copolymer (Q) in which 70 mol% or more of the carbon-carbon double bond in the conjugated diene-derived structural unit has been hydrogenated.

**6.** The resin composition according to claim 3 or 4, wherein the block copolymer (II) is a hydrogenated block copolymer (Q) in which 70 mol% or more of the carbon-carbon double bond in the conjugated diene-derived structural unit has been hydrogenated, and wherein:
the hydrogenation ratios of the carbon-carbon double bonds in the conjugated diene-derived structural unit differ between the polymer block (B) and the polymer block (C).

**7.** The resin composition according to any of claims 1 to 6, wherein the rubber (I) is at least one kind selected from a styrene-butadiene copolymer rubber, a natural rubber, a polyisoprene rubber, a polybutadiene rubber, an acrylonitrile-butadiene copolymer rubber, an ethylene-propylene-diene copolymer, a butyl rubber and a halogenated butyl rubber prepared by modifying a butyl rubber.

**8.** The resin composition according to any of claims 1 to 7, wherein the content of the crosslinking agent (III) is 1.0 to 4.0 parts by mass relative to 100 parts by mass of the total content of the rubber (I) and the block copolymer (II).

**9.** The resin composition according to any of claims 1 to 8, further containing silica.

**10.** The resin composition according to any of claims 1 to 9, further containing a silane coupling agent.

**11.** The resin composition according to any of claims 1 to 10, wherein the rubber (I) contains at least a natural rubber, and the resin composition further contains a softener.

**12.** The resin composition according to any of claims 1 to 11, wherein the abrasion volume measured using a DIN abrasion test according to JIS K 6264-2:2005 is 200 $mm^3$ or less.

**13.** A molded article of the resin composition of any of claims 1 to 12.

**14.** A sole using the resin composition of any of claims 1 to 12 as at least a part thereof.

## Patentansprüche

**1.** Harzzusammensetzung, enthaltend einen Kautschuk (I), ein Blockcopolymer (II) und ein Vernetzungsmittel (III), wobei das Massenverhältnis des Kautschuks (I) zu dem Blockcopolymer (II), (I)/(II) 99/1 bis 55/45 beträgt,

das Blockcopolymer (II) ein Blockcopolymer ist, das einen Polymerblock (A), der eine von einer aromatischen Vinylverbindung abgeleitete Struktureinheit enthält, und einen Polymerblock (B), der eine von Farnesen abgeleitete Struktureinheit (b1) enthält, enthält,
das Vernetzungsmittel (III) Schwefel und/oder eine schwefelhaltige Verbindung ist, und
der Gehalt des Vernetzungsmittels (III) 0.5 bis 6,0 Masseteile beträgt, bezogen auf 100 Masseteile des Gesamtgehalts des Kautschuks (I) und des Blockcopolymers (II).

**2.** Harzzusammensetzung nach Anspruch 1, wobei das Massenverhältnis des Kautschuks (I) zu dem Blockcopolymer (II), (I)/(II), 99/1 bis 70/30 beträgt.

**3.** Harzzusammensetzung nach Anspruch 1 oder 2, wobei das Blockcopolymer (II) weiter einen Polymerblock (C) enthält, der eine Struktureinheit (c2) enthält, die von einem konjugierten Dien außer Farnesen abgeleitet ist.

**4.** Harzzusammensetzung nach Anspruch 3, wobei das Blockcopolymer (II) mindestens zwei Polymerblöcke (A), mindestens einen Polymerblock (B) und mindestens einen Polymerblock (C) enthält und mindestens einen Polymerblock (B) an seinem Ende aufweist.

**5.** Harzzusammensetzung nach einem der Ansprüche 1 bis 4, wobei das Blockcopolymer (II) ein hydriertes Blockcopolymer (Q) ist, in dem 70 mol% oder mehr der Kohlenstoff-Kohlenstoff-Doppelbindung in der von konjugiertem Dien abgeleiteten Struktureinheit hydriert worden sind.

**6.** Harzzusammensetzung nach Anspruch 3 oder 4, wobei das Blockcopolymer (II) ein hydriertes Blockcopolymer (Q) ist, in dem 70 mol% oder mehr der Kohlenstoff-Kohlenstoff-Doppelbindung in der von konjugiertem Dien abgeleiteten Struktureinheit hydriert worden sind, und wobei:
die Hydrierungsverhältnisse der Kohlenstoff-Kohlenstoff-Doppelbindungen in der von konjugiertem Dien abgeleiteten Struktureinheit zwischen dem Polymerblock (B) und dem Polymerblock (C) unterschiedlich sind.

**7.** Harzzusammensetzung nach einem der Ansprüche 1 bis 6, wobei der Kautschuk (I) mindestens eine Art ist, ausgewählt aus einem Styrol-Butadien-Copolymer-Kautschuk, einem Naturkautschuk, einem Polyisopren-Kautschuk, einem Polybutadien-Kautschuk, einem Acrylnitril-Butadien-Copolymer-Kautschuk, einem Ethylen-Propylen-Dien-Copolymer, einem Butyl-Kautschuk und einem halogenierten Butyl-Kautschuk, hergestellt durch Modifizierung eines Butyl-Kautschuks.

**8.** Harzzusammensetzung nach einem der Ansprüche 1 bis 7, wobei der Gehalt des Vernetzungsmittels (III) 1,0 bis 4,0 Massenteile, bezogen auf 100 Massenteile des Gesamtgehalts des Kautschuks (I) und des Blockcopolymers (II), beträgt.

**9.** Harzzusammensetzung nach einem der Ansprüche 1 bis 8, weiter enthaltend Siliciumdioxid.

**10.** Harzzusammensetzung nach einem der Ansprüche 1 bis 9, weiter enthaltend ein Silan-Kopplungsmittel.

**11.** Harzzusammensetzung nach einem der Ansprüche 1 bis 10, wobei der Kautschuk (I) mindestens einen Naturkautschuk enthält, und die Harzzusammensetzung weiter einen Weichmacher enthält.

**12.** Harzzusammensetzung nach einem der Ansprüche 1 bis 11, wobei das unter Verwendung eines DIN-Abriebtests gemäß JIS K 6264-2:2005 gemessene Abriebvolumen 200 $mm^3$ oder weniger beträgt.

**13.** Formgegenstand aus der Harzzusammensetzung nach einem der Ansprüche 1 bis 12.

**14.** Sohle, bei der die Harzzusammensetzung nach einem der Ansprüche 1 bis 12 zumindest in einem Teil davon

verwendet wird.

## Revendications

1. Composition de résine contenant un caoutchouc (I), un copolymère à blocs (II) et un agent de réticulation (III), dans laquelle le rapport en masse du caoutchouc (I) sur le copolymère à blocs (II), (I)/(II), est de 99/1 à 55/45,

   le copolymère à blocs (II) est un copolymère à blocs contenant un bloc polymère (A) qui contient une unité structurelle dérivée d'un composé de vinyle aromatique et un bloc polymère (B) qui contient une unité structurelle dérivée de famésène (b1),
   l'agent de réticulation (III) est le soufre et/ou un composé contenant du soufre, et
   la teneur en l'agent de réticulation (III) est de 0,5 à 6,0 parties en masse par rapport à 100 parties en masse de la teneur totale en le caoutchouc (I) et le copolymère à blocs (II).

2. Composition de résine selon la revendication 1, dans laquelle le rapport en masse du caoutchouc (I) sur le copolymère à blocs (II), (I)/(II), est de 99/1 à 70/30.

3. Composition de résine selon la revendication 1 ou 2, dans laquelle le copolymère à blocs (II) contient en outre un bloc polymère (C) qui contient une unité structurelle (c2) dérivée d'un diène conjugué à l'exception du famésène.

4. Composition de résine selon la revendication 3, dans laquelle le copolymère à blocs (II) contient au moins deux blocs polymère (A), au moins un bloc polymère (B) et au moins un bloc polymère (C), et a au moins un bloc polymère (B) à la terminaison de celui-ci.

5. Composition de résine selon l'une quelconque des revendications 1 à 4, dans laquelle le copolymère à blocs (II) est un copolymère à blocs hydrogéné (Q) dans lequel 70 % en mol ou plus de la double liaison carbone-carbone dans l'unité structurelle dérivée de diène conjugué ont été hydrogénés.

6. Composition de résine selon la revendication 3 ou 4, dans laquelle le copolymère à blocs (II) est un copolymère à blocs hydrogéné (Q) dans lequel 70 % en mol ou plus de la double liaison carbone-carbone dans l'unité structurelle dérivée de diène conjugué ont été hydrogénés, et dans laquelle :
   les rapports d'hydrogénation des doubles liaisons carbone-carbone dans l'unité structurelle dérivée de diène conjugué diffèrent entre le bloc polymère (B) et le bloc polymère (C).

7. Composition de résine selon l'une quelconque des revendications 1 à 6, dans laquelle le caoutchouc (I) est au moins un type sélectionné parmi un caoutchouc à copolymère de styrène-butadiène, un caoutchouc naturel, un caoutchouc de polyisoprène, un caoutchouc de polybutadiène, un caoutchouc à copolymère d'acrylonitrile-butadiène, un copolymère d'éthylène-propylène-diène, un caoutchouc butylique et un caoutchouc butylique halogéné préparé en modifiant un caoutchouc butylique.

8. Composition de résine selon l'une quelconque des revendications 1 à 7, dans laquelle la teneur en l'agent de réticulation (III) est de 1,0 à 4,0 parties en masse par rapport à 100 parties en masse de la teneur totale en le caoutchouc (I) et le copolymère à blocs (II).

9. Composition de résine selon l'une quelconque des revendications 1 à 8, contenant en outre de la silice.

10. Composition de résine selon l'une quelconque des revendications 1 à 9, contenant en outre un agent adhésif au silane.

11. Composition de résine selon l'une quelconque des revendications 1 à 10, dans laquelle le caoutchouc (I) contient au moins un caoutchouc naturel, et la composition de résine contient en outre un plastifiant.

12. Composition de résine selon l'une quelconque des revendications 1 à 11, dans laquelle le volume d'abrasion mesuré en utilisant un test d'abrasion DIN conformément à JIS K 6264-2 : 2005 est de 200 $mm^3$ ou moins.

13. Articlé moulé de la composition de résine selon l'une quelconque des revendications 1 à 12.

**14.** Semelle utilisant la composition de résine selon l'une quelconque des revendications 1 à 12 en tant qu'au moins une partie de celle-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130086822 A1
- WO 2006121069 A1
- JP 2017039819 A
- JP 2016210937 A
- JP 2014189697 A
- JP 2014520017 A
- JP 2004075882 A
- JP 2003292672 A
- JP 2019026826 A
- JP 2012502135 T
- JP 2012502136 T
- JP 2011132298 A